# EUROPEAN PATENT SPECIFICATION

(11) **EP 3 142 455 B1**
(45) Date of publication and mention of the grant of the patent: **07.11.2018**
(21) Application number: 14891532.5
(22) Date of filing: 19.09.2014
(51) Int. Cl.: H04W 16/10, H04W 84/12, H04W 28/26, H04W 74/08, H04B 7/0452

(54) **PARALLEL DATA TRANSMISSION PROCESSING METHOD AND DEVICE, AND COMPUTER STORAGE MEDIUM**
PARALLELES DATENVERARBEITUNGSVERFAHREN UND VORRICHTUNG SOWIE COMPUTERSPEICHERMEDIUM
PROCÉDÉ ET DISPOSITIF DE TRAITEMENT DE TRANSMISSION DE DONNÉES PARALLÈLE ET SUPPORT DE STOCKAGE INFORMATIQUE

(30) Priority: 09.05.2014 CN 201410196645
(43) Date of publication of application: 15.03.2017
(73) Proprietor: ZTE Corporation, Shenzhen, Guangdong 518057 (CN)
(72) Inventor: XING, Weimin, Shenzhen Guangdong 518057 (CN); LI, Nan, Shenzhen Guangdong 518057 (CN); TIAN, Kaibo, Shenzhen Guangdong 518057 (CN); YAO, Ke, Shenzhen Guangdong 518057 (CN)
(74) Representative: Novagraaf Technologies
(86) International application number: PCT/CN2014/086964
(87) International publication number: WO 2015/169025

(56) References cited:
- WO-A1-2013/044411
- CN-A- 101 605 334
- CN-A- 101 895 952
- US-A1- 2006 109 804
- US-A1- 2007 297 366
- US-A1- 2011 222 408
- US-A1- 2012 201 164

## Description

### Technical Field

The present disclosure relates to a field of communication, and in particular to a method and a device for processing parallel transmission and a computer storage medium.

### Background

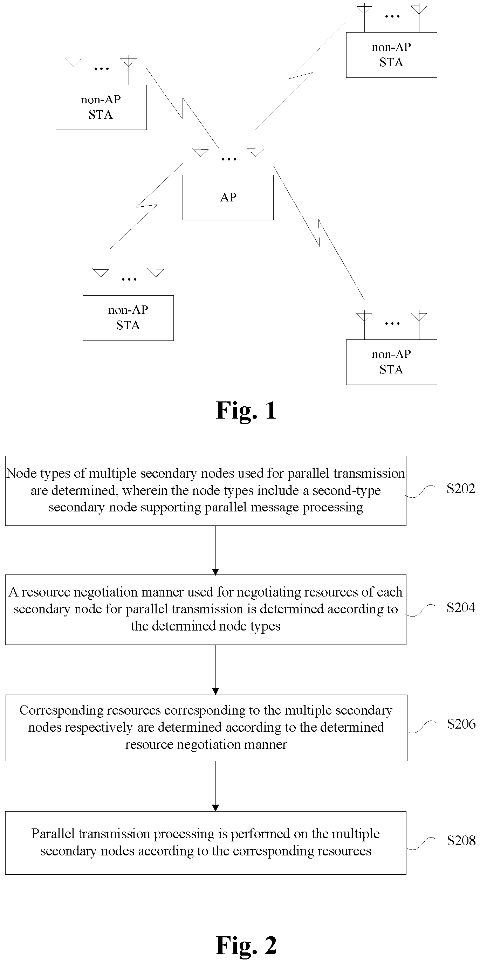

At present, with more and more users using Wireless Local Area Network (WLAN) for data communication, network loads of the WLANs constantly increases and efficiency of the WLAN tends to be obviously reduced, simply increasing the rate of the WLAN may not solve this problem. In order to solve the problem of the efficiency of the WLAN, multi-user transmission is proposed in a related art, and a multi-user transmission technology includes a Multi-User Multiple Input Multiple Output (MU-MIMO) technology (space domain multiple access), an Orthogonal Frequency Division Multiple Access (OFDMA) technology (frequency domain multiple access) and an Interleave-Division Multiple-Access (IDMA) technology (code division domain multiple access). Fig. 1 is a structure diagram of a Basic Service Set (BSS) of a WLAN in the related art, and as shown in Fig. 1, in a WLAN, an Access Point (AP) Station and multiple non-AP Stations (STAs) related to the AP station form a BSS. Multi-user transmission in a WLAN usually refers to that multiple secondary nodes simultaneously send data to a primary node or the primary node simultaneously sends data to the multiple secondary nodes. Generally, the primary node is an AP or a non-AP STA with a special capability, and the secondary nodes are ordinary non-AP STAs.

Therefore, although a multi-user transmission mechanism may effectively improve efficiency of a WLAN, an effective parallel transmission link is not able to be established due to own characteristics of the WLAN in the related art and it is consequently impossible to directly implement parallel transmission in the WLAN.

Document US 2011/222408 A1 concerns parallel transmission over WLAN. Document US 2006/109804 A1 relates to simultaneous transmission in WLAN and resource allocation.

### Summary

Embodiments of the present disclosure provides a method and a device for processing parallel transmission, so as to at least solve the problem that parallel transmission is not able to be directly implemented in a WLAN in the related technology.

The invention is set out in the appended set of claims. The embodiments and/or examples of the following description which are not covered by the appended claims are considered as not being part of the present invention. According to an aspect of an embodiment of the present disclosure, a method for processing parallel transmission is provided, including: determining node types of multiple secondary nodes used for parallel transmission, and the node types include a second-type secondary node supporting parallel message processing; determining, according to the determined node types, a resource negotiation manner used for negotiating resources of each secondary node for the parallel transmission; determining corresponding resources corresponding to the multiple secondary nodes respectively according to the determined resource negotiation manner; and performing parallel transmission processing on the multiple secondary nodes according to the corresponding resources.

In an example embodiment, determining, according to the determined node types, the resource negotiation manner used for negotiating the resources of each secondary node for the parallel transmission includes at least one of: when the node types of the multiple secondary nodes further include a first-type secondary node not supporting the parallel message processing, determining that a resource negotiation manner of respective independent resource negotiation is adopted for the first-type secondary node and the second-type secondary node; when the node types of the multiple secondary nodes merely include the second-type secondary nodes supporting the parallel message processing, determining that a resource negotiation manner of respective independent resource negotiation is adopted for the second-type secondary nodes; and when the node types of the multiple secondary nodes merely include the second-type secondary nodes supporting the parallel message processing, determining that a resource negotiation manner of simultaneous parallel negotiation is adopted for the second-type secondary nodes.

In an example embodiment, when the node types of the multiple secondary nodes further include the first-type secondary node not supporting the parallel message processing, determining the corresponding resources corresponding to the multiple secondary nodes respectively according to the determined resource negotiation manner includes: sending, after corresponding resources of the first-type secondary node on a primary channel is determined, to the second-type secondary node a request message used for requesting for data transmission, and the request message sent to the second-type secondary node includes first resource range information of resources except the resources occupied by the first-type secondary node; and determining corresponding resources of the second-type secondary node according to a response message fed back by the second-type secondary node, and the response message fed back by the second-type secondary node includes information of corresponding resources of the second-type secondary node, and the corresponding resources of the second-type secondary node is selected by the second-type secondary node.

In an example embodiment, the request message sent to the second-type secondary node includes at least one of: a unicast Request To Send, RTS, frame, a unicast predetermined frame and a multicast predetermined frame, and a reserved indicator bit in the unicast RTS frame indicates the carried first resource range information, and an information field of the unicast predetermined frame or the multicast predetermined frame indicates the carried first resource range information; and the response message fed back by the second-type secondary node includes a unicast Clear To Send, CTS, frame or a unicast predetermined response frame, and a reserved indicator bit in the CTS frame fed back by the second-type secondary node indicates the carried information of corresponding resources selected by the second-type secondary node, and an information field of the unicast predetermined response frame indicates the carried information of corresponding resources selected by the second-type secondary node.

In an example embodiment, determining the corresponding resources corresponding to the multiple secondary nodes respectively according to the determined resource negotiation manner further includes: determining that resources corresponding to the first-type secondary node includes primary channel resources, and transmission time of parallel transmission on a secondary channel is determined by data transmission time on the primary channel.

In an example embodiment, when the node types of the multiple secondary nodes merely include the second-type secondary nodes supporting the parallel message processing, determining the corresponding resources corresponding to the multiple secondary nodes respectively according to the determined resource negotiation manner includes: sending a request message used for requesting for data transmission to the second-type secondary node, and the request message includes second resource range information of resources for the second-type secondary node to select for parallel transmission; and determining corresponding resources of the second-type secondary node according to received response message sent by the second-type secondary node, and the response message includes information of the corresponding resources selected by the second-type secondary node according to the second resource range information.

In an example embodiment, the request message sent to the second-type secondary node includes at least one of: a unicast RTS frame, a unicast predetermined frame and a multicast predetermined frame, and a reserved indicator bit in the RTS frame indicates the carried second resource range information, and an information field of the unicast predetermined frame/the multicast predetermined frame indicates the second resource range information for parallel transmission of the second-type secondary node; and the response message fed back by the second-type secondary node includes a unicast CTS frame or a unicast predetermined response frame, and a reserved indicator bit in the CTS frame indicates the carried information of the corresponding resources selected by the second-type secondary node, and an information field of the unicast predetermined response frame indicates the carried information of corresponding resources selected by the second-type secondary node.

In an example embodiment, performing parallel transmission processing on the multiple secondary nodes according to the corresponding resources includes: sending corresponding data to the multiple secondary nodes at a same time by adopting different corresponding resources, and each piece of data sent to the second-type secondary node includes response parameter adjustment indication information used for adjusting response parameters of the corresponding secondary node responding to the data.

In an example embodiment, before sending the corresponding data to the multiple secondary nodes at the same time by adopting different corresponding resources, further including: acquiring response parameters corresponding to the multiple secondary nodes, and the response parameter adjustment indication information takes a parameter of the first-type secondary node as a criterion when the multiple secondary nodes further include the first-type secondary node not supporting parallel message processing.

In an example embodiment, the response parameter adjustment indication information includes at least one of: power adjustment information, immediate response sending time point adjustment information and carrier frequency offset pre-adjustment information.

In an example embodiment, and the corresponding resources include at least one of: frequency-domain resources, code division resources and space-domain resources.

In an example embodiment, and, when the corresponding resources are frequency-domain resources, the first resource range information and the second resource range information respectively include at least one of: a starting position and bandwidth information of a frequency band; a temporary primary channel position and bandwidth information of the frequency band; the temporary primary channel position of the frequency band; and sub-channel list information.

According to another embodiment of the present disclosure, a device for processing parallel transmission is provided, including: a first determination component, configured to determine node types of multiple secondary nodes used for parallel transmission, and the node types include a second-type secondary node supporting parallel message processing; a second determination component, configured to determine, according to the determined node types, a resource negotiation manner used for negotiating resources of each secondary node for the parallel transmission; a third determination component, configured to determine corresponding resources corresponding to the multiple secondary nodes respectively according to the determined resource negotiation manner; and a processing component, configured to perform parallel transmission processing on the multiple secondary nodes according to the corresponding resources.

In an example embodiment, the second determination component includes at least one of: a first determination element, configured to, when the node types of the multiple secondary nodes further include a first-type secondary node not supporting the parallel message processing, determine that a resource negotiation manner of respective independent resource negotiation is adopted for the first-type secondary node and the second-type secondary node; a second determination element, configured to, when the node types of the multiple secondary nodes merely include the second-type secondary nodes supporting the parallel message processing, determine that a resource negotiation manner of respective independent resource negotiation is adopted for the second-type secondary nodes; and a third determination element, configured to, when the node types of the multiple secondary nodes merely include the second-type secondary nodes supporting the parallel message processing, determine that a resource negotiation manner of simultaneous parallel negotiation is adopted for the second-type secondary nodes.

In an example embodiment, the third determination component includes: a first sending element, configured to send, after corresponding resources of the first-type secondary node on a primary channel is determined, to the second-type secondary node a request message used for requesting for data transmission, and the request message sent to the second-type secondary node includes first resource range information of resources except the resources occupied by the first-type secondary node; and a fourth determination element, configured to determine corresponding resources of the second-type secondary node according to the response message fed back by the second-type secondary node, and the response message fed back by the second-type secondary node includes information of corresponding resources of the second-type secondary node, and the corresponding resources of the second-type secondary node is selected by the second-type secondary node.

In an example embodiment, the third determination component further includes: a fifth determination element, configured to determine that the resources corresponding to the first-type secondary node includes primary channel resources, and transmission time of parallel transmission on a secondary channel is determined by data transmission time on the primary channel.

In an example embodiment, the third determination component includes: a second sending element, configured to, when the node types of the multiple secondary nodes merely include the second-type secondary nodes supporting the parallel message processing, send a request message used for requesting for data transmission to the second-type secondary node, and the request message includes second resource range information of resources for the second-type secondary node to select for parallel transmission; and a sixth determination element, configured to determine corresponding resources of the second-type secondary node according to received response message sent by the second-type secondary node, and the response message includes information of the corresponding resources selected by the second-type secondary node according to the second resource range information.

In an example embodiment, the processing component includes: a third sending element, configured to send corresponding data to the multiple secondary nodes at a same time by adopting different corresponding resources, and each piece of data sent to the second-type secondary node includes response parameter adjustment indication information used for adjusting response parameters of the corresponding secondary node responding to the data.

In an example embodiment, the device further including: an acquisition element, configured to acquire response parameters corresponding to the multiple secondary nodes, and the response parameter adjustment indication information takes a response parameter of the first-type secondary node as a criterion when the multiple secondary nodes further include the first-type secondary node not supporting parallel message processing.

According to an embodiment of the present disclosure, equipment for processing parallel transmission is provided, including any one of the abovementioned device.

According to an embodiment of the present disclosure, a computer storage medium is provided, in which an execution instruction is stored, and the execution instruction is configured to execute any one of the abovementioned methods.

According to the embodiment of the present disclosure, node types of multiple secondary nodes used for parallel transmission are determined, and the node types include a second-type secondary node supporting parallel message processing; a resource negotiation manner used for negotiating resources of each secondary node for the parallel transmission is determined according to the determined node types; corresponding resources corresponding to the multiple secondary nodes respectively are determined according to the determined resource negotiation manner; and parallel transmission processing is performed on the multiple secondary nodes according to the corresponding resources, so that the problem that an effective parallel transmission link is not able to be established due to own characteristics of a WLAN in the related art and it is consequently impossible to directly implement parallel transmission in the WLAN is solved, and the effects of effectively avoiding interference to parallel transmission, effectively achieving compatibility with new and old equipment of the network and effectively improving efficiency of the network are further achieved.

### Brief Description of the Drawings

The drawings described here are adopted to provide further understanding of embodiments of the present disclosure, and form a part of the present disclosure. Schematic embodiments of the present disclosure and descriptions thereof are adopted to explain the embodiments of the present disclosure and should not be considered to be improper limits to the embodiments of the present disclosure. In the drawings:
Fig. 1 is a structure diagram of a BSS of a WLAN in the related art;
Fig. 2 is a flowchart of a method for processing parallel transmission according to an embodiment of the present disclosure;
Fig. 3 is a structure block diagram of a device for processing parallel transmission according to an embodiment of the present disclosure;
Fig. 4 is an example structure block diagram of a second determination component in the device for processing parallel transmission according to an embodiment of the present disclosure;
Fig. 5 is a first example structure block diagram of a third determination component in the device for processing parallel transmission according to an embodiment of the present disclosure;
Fig. 6 is a second example structure block diagram of the third determination component in the device for processing parallel transmission according to an embodiment of the present disclosure;
Fig. 7 is a third example structure block diagram of the third determination component in the device for processing parallel transmission according to an embodiment of the present disclosure;
Fig. 8 is a first example structure block diagram of a processing component in the device for processing parallel transmission according to an embodiment of the present disclosure;
Fig. 9 is a second example structure block diagram of the processing component in the device for processing parallel transmission according to an embodiment of the present disclosure;
Fig. 10 is a diagram of channel division according to an example implementation mode of the present disclosure;
Fig. 11 is a diagram of parallel transmission establishment according to a first example embodiment of the present disclosure;
Fig. 12 is a diagram of parallel transmission establishment according to a second example embodiment of the present disclosure;
Fig. 13 is a diagram of parallel transmission establishment according to a fourth example embodiment of the present disclosure; and
Fig. 14 is a diagram of parallel transmission establishment according to a fifth example embodiment of the present disclosure.

### Detailed Description of the Embodiments

The embodiments of the present disclosure will be described below with reference to the drawings and embodiments in detail. It is important to note that the embodiments in the present disclosure and characteristics in the embodiments may be combined under the condition of no conflicts.

In the related art, there are some problems during data transmission by parallel technologies such as OFDMA/Frequency Division Multiple Access (FDMA) in a WLAN, which are caused by the following characteristics of the WLAN.

First, the WLAN works in an unlicensed frequency band, there is likely a conflict when STAs compete to send data. Channel resources may be reserved by virtue of a control frame in the WLAN in a related art, so as to protect data transmission. Specifically, channel time, i.e. a Transmission Opportunity (TXOP), may be reserved by interacting an RTS frame and a CTS frame. The above RTS/CTS frame includes a duration indication of the following data transmission to be performed, and the indication may indicate auditing STAs (or third party STAs) around an STA sending the RTS/CTS frame not to compete for the channel. In order to ensure fairness, a time length of the reserved TXOP may not be randomly set but related to a Quality of Service (QoS) parameter of data to be transmitted, and is specifically related to an Access Category (AC) of the data. Different ACs have different limits of the TXOP time length. Parallel transmission involves sending of data of multiple STAs, and may further involve sending of data of multiple ACs, and a sending conflict occurs more probably.

Second, there are both legacy STAs (which may be called first-type equipment) and equipment supporting (or translated into enabling) new features (for example, equipment supporting new features defined by the High Efficiency WLAN (HEW) group, which may be called second-type equipment) exist in the WLAN. The new equipment is backwards compatible with the legacy STAs, the two kinds of equipment coexist in the network. However, there is no corresponding compatible mechanism used for supporting parallel sending of data of the first-type equipment and the second-type equipment in the related art.

Third, a special channel using rule is adopted in the WLAN. A standard defines a minimum basic bandwidth, such as 20MHz, and a sending bandwidth of all data is required to be the nth power of 2 of the basic bandwidth; and moreover, a primary channel is required to be selected for a BSS. For example, a working bandwidth of a BSS is 80MHz and includes four 20MHz sub-channels of which one 20MHz sub-channel serves as a primary channel of the network and the other sub-channels within 80MHz serve as secondary channels. Data sending is required to meet a bandwidth requirement of a protocol channel solution, and every sending operation is required to include the primary channel. All equipment detect signals on the primary channel, judges a channel state according to a primary channel detection result, and receives data. It can be seen that an STA triggers data reception through a primary channel carrier monitoring mechanism, and when a primary node directly adopts OFDMA for parallel transmission, all secondary nodes merely detect and receive data including the primary channel and the secondary nodes is not able to know data sending on independent secondary channels, which causes a data sending failure.

For the problems of use of the parallel transmission technologies in the WLAN in the related art, it is mainly obtained by analysis over the problems that there is no effective parallel link establishment process before parallel transmission. On such a basis, the embodiment provides a solution for establishing parallel transmission links and parallel transmission is performed based on the established parallel transmission links.

The embodiment provides a method for processing parallel transmission, Fig. 2 is a flowchart of a method for processing parallel transmission according to an embodiment of the present disclosure, and as shown in Fig. 2, the flow includes the following steps:
In Step 202: node types of multiple secondary nodes used for parallel transmission are determined, and the node types include a second-type secondary node (similar to the abovementioned second-type equipment) supporting (or translated into enabling) parallel message processing;
In Step 204: a resource negotiation manner used for negotiating resources of each secondary node for parallel transmission is determined according to the determined node types;
In Step 206: corresponding resources corresponding to the multiple secondary nodes respectively are determined according to the determined resource negotiation manner; and
In Step 208: parallel transmission processing is performed on the multiple secondary nodes according to the corresponding resources.

By the steps, for a primary node of a BSS for parallel transmission in a network, the resource negotiation manner is determined according to the node types at first, then the corresponding resources respectively corresponding to the multiple secondary nodes for parallel transmission are determined according to the determined resource negotiation manner, and parallel transmission processing is performed according to the determined corresponding resources. Through determining the corresponding resources corresponding to the nodes used for parallel transmission respectively, interference among the secondary nodes is effectively avoided; and through determining the corresponding resources according to the node types, compatibility among different secondary nodes is effectively achieved. That is, by establishing parallel transmission links, the problem that it is consequently impossible to directly implement parallel transmission in the WLAN, due to that an effective parallel transmission link is not able to be established due to own characteristics of a WLAN in the related art is solved. The effects of effectively avoiding interference to parallel transmission, effectively achieving compatibility with new and old equipment of the network and effectively improving efficiency of the network are further achieved.

The abovementioned processing includes establishment of the parallel transmission links and parallel transmission based on the established parallel transmission links, and the following execution steps may be adopted: the primary node acquires a TXOP, sends a first-type establishment request frame to a first-type secondary node (similar to the abovementioned first-type equipment) not supporting parallel message processing and receives a first-type establishment response frame sent by the first-type secondary node; and/or, the primary node sends a first-type establishment request frame or a second-type establishment request frame to the second-type secondary node, and receives a first-type establishment response frame or a second-type establishment response frames sent by the second-type secondary node; and the primary node sends parallel radio frames to the secondary nodes, and receives response frames for responding the parallel radio frames from the secondary nodes.

In an example embodiment, the first-type establishment request frame, the first-type establishment response frame, the second-type establishment request frame and the second-type establishment response frame are used for a transmission establishment process before sending of the parallel radio frames. The first-type establishment request frame and the first-type establishment response frame are frames which is able to be parsed by the primary node, the first-type secondary node and the second-type secondary node, and the second-type establishment request frame and the second-type establishment response frame are frames which is able to be parsed by the primary node and the second-type secondary node, and sending frequency bands of the first-type establishment request frame, the first-type establishment response frame, the second-type establishment request frame and the second-type establishment response frame include a primary channel of the network. The operation that the primary node sends the parallel radio frames to the secondary nodes refers to that the primary node transmits data frames to multiple nodes at the same time by virtue of different resources (for example, including at least one of: frequency-domain resources, code division domain resources and space-domain resources).

Descriptions will be made below with reference to specific types of frames corresponding to implementation scenarios.

For different scenarios corresponding to parallel transmission, different resource negotiation manners may also be correspondingly adopted. For example, when the node types of the multiple secondary nodes further include the first-type secondary node not supporting parallel message processing, it is determined that a resource negotiation manner of respective independent resource negotiation is adopted for the first-type secondary node and the second-type secondary node; when the node types of the multiple secondary nodes merely include the second-type secondary nodes supporting parallel message processing, it is determined that a resource negotiation manner of respective independent resource negotiation is adopted for the second-type secondary nodes; and when the node types of the multiple secondary nodes merely include the second-type secondary nodes supporting parallel message processing, it is determined that a resource negotiation manner of simultaneous parallel negotiation is adopted for the second-type secondary nodes.

For different scenarios corresponding to parallel transmission, different processing manners may also be adopted for determining the corresponding resources corresponding to the multiple secondary nodes for parallel transmission respectively according to the determined resource negotiation manner, and specifically, the node types of the multiple secondary nodes may include the first-type secondary nodes and the second-type secondary nodes, and may also merely include the second-type secondary nodes. Descriptions will be made respectively below.

For example, when the node types of the multiple secondary nodes further include the first-type secondary nodes not supporting parallel message processing, the primary node may determine the corresponding resources of the second-type secondary node after determining the corresponding resources of the first-type secondary node on a primary channel, and transmission time of parallel transmission on a secondary channel is determined by data transmission time on the primary channel; during implementation, the following processing manner may be adopted: the primary node sends a request message used for requesting for data transmission to the second-type secondary node after determining the corresponding resources of the first-type secondary node on the primary channel, and the request message sent to the second-type secondary node includes first resource range information of resources except the resources occupied by the first-type secondary node; and the corresponding resources of the second-type secondary node is determined according to a response message fed back by the second-type secondary node, and the response message fed back by the second-type secondary node includes information of corresponding resources of the second-type secondary node, and the corresponding resources of the second-type secondary node is selected by the second-type secondary node.

In an example embodiment, the request messages sent to the second-type secondary node by the primary node may include at least one of: a unicast RTS frame, a unicast predetermined frame and a multicast predetermined frame, and a reserved indicator bit in the unicast RTS frame indicates the carried first resource range information, and an information field of the unicast predetermined frame or the multicast predetermined frame indicates the carried first resource range information; and the response message fed back by the second-type secondary node includes a unicast CTS frame or a unicast predetermined response frame, and a reserved indicator bit in the unicast CTS frame fed back by the second-type secondary node indicates the carried information of corresponding resources selected by the second-type secondary node, and an information field of the unicast predetermined response frame indicates the carried information of corresponding resources selected by the second-type secondary node.

Based on the scenario corresponding to the resource negotiation manner, descriptions will be made with adoption of the following specific types of frames for the parallel transmission link establishment process as an example. The first-type establishment request frame is an RTS frame, and correspondingly, the first-type establishment response frame sent to the primary node by the first-type secondary node is a CTS frame. The first-type establishment request frame sent to the second-type secondary node is an RTS frame including frequency band range indication information, and correspondingly, the first-type establishment response frame sent by the second-type secondary node is a CTS frame including frequency band range indication information.

For example, when the resources are frequency-domain resources, the frequency band range indication information in the RTS frame indicates a frequency band range indicated by the primary node for the second-type secondary node to use, and the frequency band range indication information in the CTS frame indicates a frequency band range confirmed by the second-type secondary node to use, and the frequency band range indicated by the frequency band range indication information in the CTS frame is a subset of the frequency band range indicated by the frequency band range indication information in the RTS frame. Preferably, the frequency band range indication information may be set in a signaling domain of a physical layer or a Media Access Control (MAC) layer in the RTS frame and the CTS frame.

The second-type establishment request frame may be a parallel transmission request frame, and when there is at least one piece of second-type secondary node information is included, the second-type secondary node information at least includes the frequency band range indication information and node identification information; and the second-type establishment response frame may be a parallel transmission response frame and at least include the frequency band range indication information, and the frequency band range indication information indicates a starting position and bandwidth information of a frequency band, or indicates a temporary primary channel position and bandwidth information of the frequency band, or indicates sub-channel list information, or indicates temporary primary channel position information.

In an example embodiment, the temporary primary channel position information indicates a position of the primary channel temporarily adopted by the secondary node for parallel transmission. The parallel radio frames may include data of multiple secondary nodes, and data sent to the second-type secondary node includes response parameter adjustment indication information. The response parameter adjustment indication information is determined by the primary node according to a predefined criterion.

In an example embodiment, when the parallel radio frame further include data of the first-type secondary node, the response parameter adjustment indication information is determined by the primary node by taking a response parameter of the first-type secondary node as a criterion, and the response parameter adjustment indication information includes at least one of the following information: power adjustment information, immediate response sending time point adjustment information and carrier frequency offset pre-adjustment information. In an example embodiment, the response parameter adjustment indication information may be set in a header part of an MAC layer frame of the data and/or a header part of a physical layer frame of the data.

For another example, when the node types of the multiple secondary nodes merely include the second-type secondary node supporting parallel message processing, the corresponding resources corresponding to the multiple secondary nodes respectively are determined according to the determined resource negotiation manner. The following processing manner may be adopted, and it is important to note that processing, which is similar to the processing performed when the node types further include the first-type secondary node not supporting parallel message processing, will not be elaborated herein.

The primary node sends a request message used for requesting for data transmission to the a second-type secondary node, and the request message includes second resource range information of resources for the second-type secondary node to select for parallel transmission; and the primary node determines the corresponding resources of the second-type secondary node according to a received response message sent by the second-type secondary node, and the response message includes information of the corresponding resources selected by the second-type secondary node according to the second resource range information. In an example embodiment, the request message sent to the second-type secondary node includes at least one of: a unicast RTS frame, a unicast predetermined frame and a multicast predetermined frame, and a reserved indicator bit in the RTS frame indicates the carried second resource range information, and an information field of the unicast predetermined frame/the multicast predetermined frame indicates the second resource range information for parallel transmission of the second-type secondary node; and the response message fed back by the second-type secondary node includes a unicast CTS frame or a unicast predetermined response frame, and a reserved indicator bit in the CTS frame indicates the carried information of the corresponding resources selected by the second-type secondary node, and an information field of the unicast predetermined response frame indicates the carried information of corresponding resources selected by the second-type secondary node.

In an example embodiment, when parallel transmission processing is performed on the multiple secondary node according to the corresponding resources, corresponding data may be sent to the multiple secondary nodes at the same time by adopting different corresponding resources, and each piece of data sent to the second-type secondary node includes the response parameter adjustment indication information used for adjusting response parameters to respond the data by the corresponding secondary node. It is important to note that it is also necessary to acquire the response parameters corresponding to the multiple secondary nodes before the corresponding data are sent to the multiple secondary nodes at the same time by adopting different corresponding resources, and the primary node determines the response parameter adjustment indication information according to the predetermined criterion when the multiple secondary nodes are all second-type secondary nodes; and when the multiple secondary nodes further include the first-type secondary node not supporting parallel message processing, the response parameter adjustment indication information may be determined by taking the response parameter of the first-type secondary node as a criterion. In an example embodiment, the response parameter adjustment indication information may include multiple types, and for example, may include at least one of: power adjustment information, immediate response sending time point adjustment information and carrier frequency offset pre-adjustment information.

It is important to note that the step that the corresponding resources corresponding to the multiple secondary nodes respectively are determined according to the determined resource negotiation manner may further include that: it is determined that the resources corresponding to the first-type secondary node include resources of the primary channel, and the transmission time of parallel transmission on the secondary channel is determined by the data transmission time on the primary channel. That is, an upper time limit of the TXOP acquired by the primary node is equal to a TXOP limit of an AC corresponding to the data occupying the primary channel in the parallel radio frame.

In addition, the corresponding resources may be multiple types of resources, and for example, may include at least one of: frequency-domain resources, code division resources and space-domain resources. When the corresponding resources are frequency-domain resources, the first resource range information and the second resource range information include at least one of: a starting position and bandwidth information of a frequency band; a temporary primary channel position and bandwidth information of the frequency band; the temporary primary channel position of the frequency band; and sub-channel list information.

The embodiment further provides a device for processing parallel transmission, which is configured to implement the abovementioned embodiment and example implementation modes, and that what has been described will not be elaborated. For example, term "component", used below, may implement a combination of software and/or hardware with a preset function. Although the device described in the following embodiment is preferably implemented with software, implementation with hardware or a combination of software and hardware is also possible and conceivable.

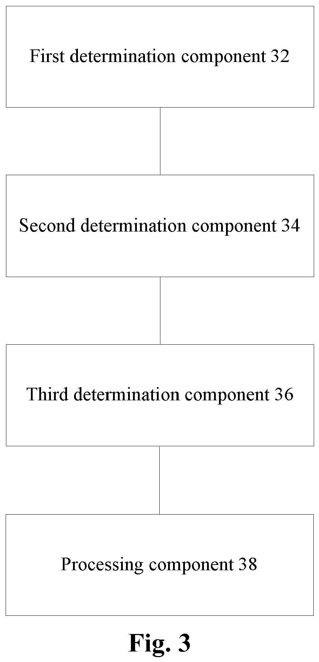

Fig. 3 is a structure block diagram of a device for processing parallel transmission according to an embodiment of the present disclosure, and as shown in Fig. 3, the device includes a first determination component 32, a second determination component 34, a third determination component 36 and a processing component 38. The device will be described below.

The first determination component 32 is configured to determine node types of multiple secondary nodes used for parallel transmission, and the node types include a second-type secondary node supporting parallel message processing; the second determination component 34 is connected to the first determination component 32, and is configured to determine, according to the determined node types, a resource negotiation manner used for negotiating resources of each secondary node for the parallel transmission; the third determination component 36 is connected to the second determination component 34, and is configured to determine corresponding resources corresponding to the multiple secondary nodes respectively according to the determined resource negotiation manner; and the processing component 38 is connected to the third determination component 36, and is configured to perform parallel transmission processing on the multiple secondary nodes according to the corresponding resources.

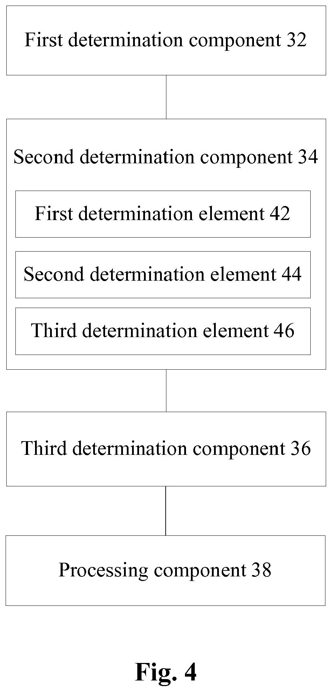

Fig. 4 is an example structure block diagram of the second determination component 34 in the device for processing parallel transmission according to an embodiment of the present disclosure, and as shown in Fig. 4, the second determination component 34 includes at least one of: a first determination element 42, a second determination element 44 and a third determination element 46. The second determination component 34 will be described below.

The first determination element 42 is configured to, when the node types of the multiple secondary nodes further include a first-type secondary node not supporting the parallel message processing, determine that a resource negotiation manner of respective independent resource negotiation is adopted for the first-type secondary node and the second-type secondary node; the second determination element 44 is configured to, when the node types of the multiple secondary nodes merely include the second-type secondary nodes supporting the parallel message processing, determine that a resource negotiation manner of respective independent resource negotiation is adopted for the second-type secondary nodes; and the third determination element 46 is configured to, when the node types of the multiple secondary nodes merely include the second-type secondary nodes supporting the parallel message processing, determine that a resource negotiation manner of simultaneous parallel negotiation is adopted for the second-type secondary nodes.

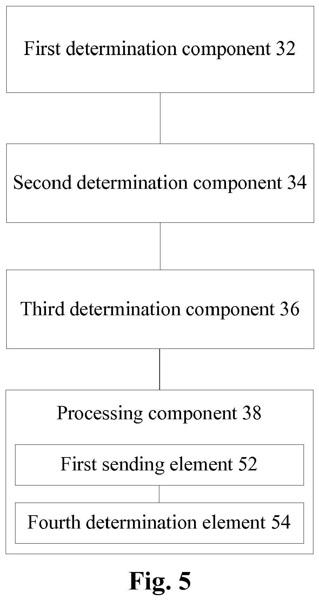

Fig. 5 is a first example structure block diagram of the third determination component 36 in the device for processing parallel transmission according to an embodiment of the present disclosure, and as shown in Fig. 5, the third determination component 36 includes a first sending element 52 and a fourth determination element 54. The third determination component 36 will be described below.

The first sending element 52 is configured to send a request message used for requesting for data transmission to the second-type secondary node after the corresponding resources of the first-type secondary node on a primary channel is determined, and the request message sent to the second-type secondary node includes first resource range information of resources except the resources occupied by the first-type secondary node; and the fourth determination element 54 is connected to the first sending element 52, and is configured to determine the corresponding resources of the second-type secondary node according to the response message fed back by the second-type secondary node, and the response message fed back by the second-type secondary node includes information of corresponding resources of the second-type secondary node, and the corresponding resources of the second-type secondary node is selected by the second-type secondary node.

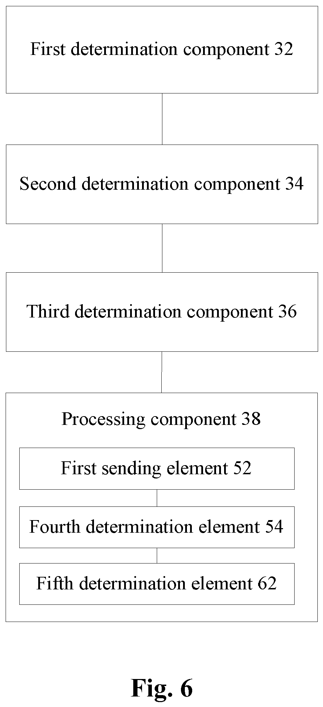

Fig. 6 is a second example structure block diagram of the third determination component 36 in the device for processing parallel transmission according to an embodiment of the present disclosure, and as shown in Fig. 6, the third determination component 36 further, besides all the structures shown in Fig. 5, includes: a fifth determination element 62. The fifth determination element 62 will be described below.

The fifth determination element 62 is connected to the fourth determination element 54, and is configured to determine that the resources corresponding to the first-type secondary node includes the primary channel resources, and transmission time of parallel transmission on a secondary channel is determined by data transmission time on the primary channel.

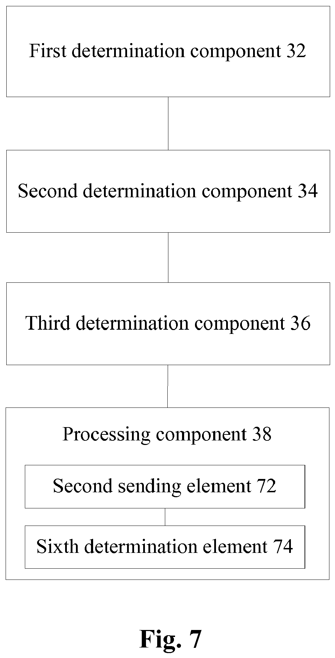

Fig. 7 is a third example structure block diagram of the third determination component 36 in the device for processing parallel transmission according to an embodiment of the present disclosure, and as shown in Fig. 7, the third determination component 36 includes a second sending element 72 and a sixth determination element 74. The third determination component 36 will be described below.

The second sending element 72 is configured to, when the node types of the multiple secondary nodes merely include the second-type secondary nodes supporting the parallel message processing, send a request message used for requesting for data transmission to the second-type secondary node, and the request message includes second resource range information of resources for the second-type secondary node to select for parallel transmission; and the sixth determination element 74 is connected to the second sending element 72, and is configured to determine corresponding resources of the second-type secondary node according to received response message sent by the second-type secondary node, and the response message includes information of the corresponding resources selected by the second-type secondary node according to the second resource range information.

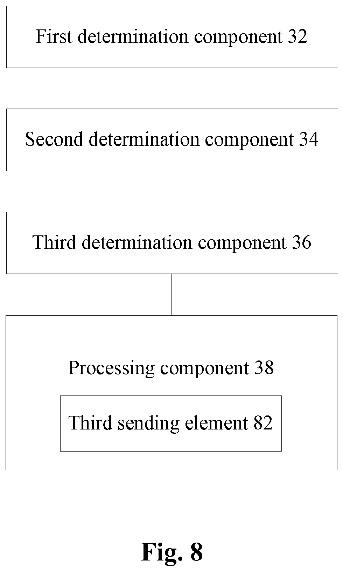

Fig. 8 is a first example structure block diagram of the processing component 38 in the device for processing parallel transmission according to an embodiment of the present disclosure, and as shown in Fig. 8, the processing component 38 includes a third sending element 82. The third sending element 82 will be described below.

The third sending element 82 is configured to send corresponding data to the multiple secondary nodes at a same time by adopting different corresponding resources, and each piece of data sent to the second-type secondary node includes response parameter adjustment indication information used for adjusting response parameters of the corresponding secondary node responding to the data.

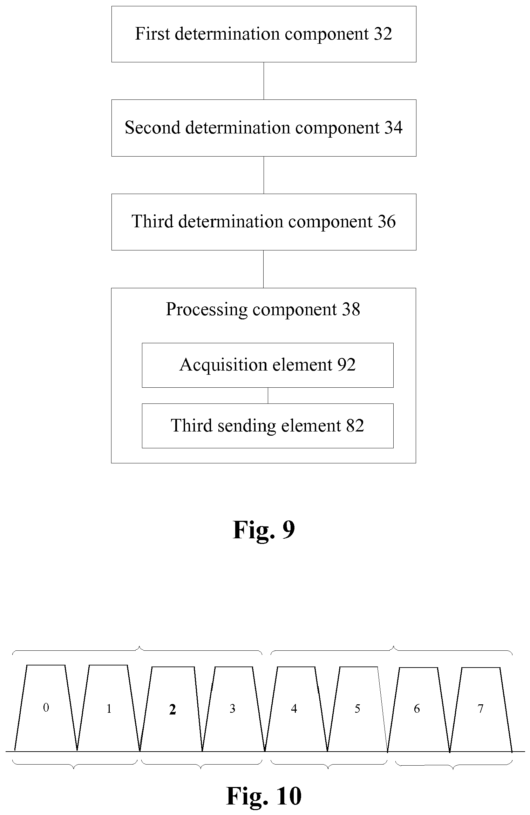

Fig. 9 is a second example structure block diagram of the processing component 36 in the device for processing parallel transmission according to an embodiment of the present disclosure, and as shown in Fig. 9, the processing component 38 further, besides all the structures shown in Fig. 8, includes an acquisition element 92. The acquisition element 92 will be described below.

The acquisition element 92 is connected to the third sending element 82, and is configured to acquire response parameters corresponding to the multiple secondary nodes, and the response parameter adjustment indication information takes a response parameter of the first-type secondary node as a criterion when the multiple secondary nodes further include the first-type secondary node not supporting parallel message processing.

The embodiment of the present disclosure further provides equipment for processing parallel transmission, which includes any abovementioned device for processing parallel transmission.

The embodiment of the present disclosure further provides a computer storage medium, in which an execution instruction is stored, and the execution instruction is configured to execute any abovementioned method for processing parallel transmission.

According to the establishment method for parallel multi-user transmission in the WLAN in the abovementioned embodiments and example embodiments, interference brought by parallel transmission may be effectively avoided, problems about synchronization, channel usage and scheduling and the like for parallel transmission in the related art are effectively solved, compatibility with conventional WLAN equipment may be achieved, and efficiency of the network is effectively improved.

Example implementation modes of the present disclosure will be described below with reference to the drawings.

Before the example implementation modes are described, contents indicated by frequency range indication information under different conditions are described when resources configured to parallel transmission are frequency-domain resources.

It is supposed that a running bandwidth of a network is 160MHz, each sub-channel occupies 20MHz and the sub-channel numbers are to be 0, 1, 2, 3, 4, 5, 6 and 7 respectively. A primary channel of a BSS is sub-channel 2. Fig. 10 is a diagram of channel division according to an example implementation mode of the present disclosure, and as shown in Fig. 10, four 40MHz channels and two 80MHz channels are also defined by the channel division, and for example, 0 and 1 may form a 40MHz channel, but 1 and 2 is not able to form a 40MHz channel.

The frequency range indication information may include a starting position of a frequency band (or called a starting position of a channel) and bandwidth information. For example, the number of indicator bits of the starting position of the channel is 3, the number of indicator bits of a channel bandwidth is 2, and when a value indicated by the starting position of the channel is "100" and a value indicated by the channel bandwidth is "01", it is indicated that a frequency range is a 40MHz bandwidth started from sub-channel 4 and including sub-channels 4 and 5.

The frequency range indication information may include a temporary primary channel position and bandwidth information of the frequency band. For example, when an indicated temporary primary channel is primary channel 6 and a channel bandwidth is 80MHz, the frequency range is an 80MHz bandwidth including sub-channels 4, 5, 6 and 7 according to the channel division.

The frequency range indication information may include the temporary primary channel position of the frequency band, and a physical layer frame header of a radio frame includes a sending bandwidth indicator of the radio frame. For example, when a temporary primary channel position of a certain STA is determined to be sub-channel 6 in a parallel transmission establishment process, the STA performs carrier detection by taking sub-channel 6 as a temporary primary channel during parallel transmission, and acquires specific data bandwidth information according to a detection result and a physical frame header sent on the temporary primary channel.

The frequency range indication information may include sub-channel list information. For example, 8 bits may be adopted to indicate available sub-channels respectively, and when the 8 bits are "01001111", it is indicated that sub-channels 1, 4, 5, 6 and 7 are available.

### Embodiment 1

An AP and multiple non-AP STAs form a BSS, and a running bandwidth of the BSS is 40MHz, including a 20MHz primary channel and a 20MHz secondary channel, but STA1 is a legacy STA merely supporting standard 11a and supports a maximum bandwidth of 20MHz and STA2 is an HEW STA supporting OFDMA transmission and a 40MHz bandwidth. Default detection channels of all the STAs at least include the primary channel.

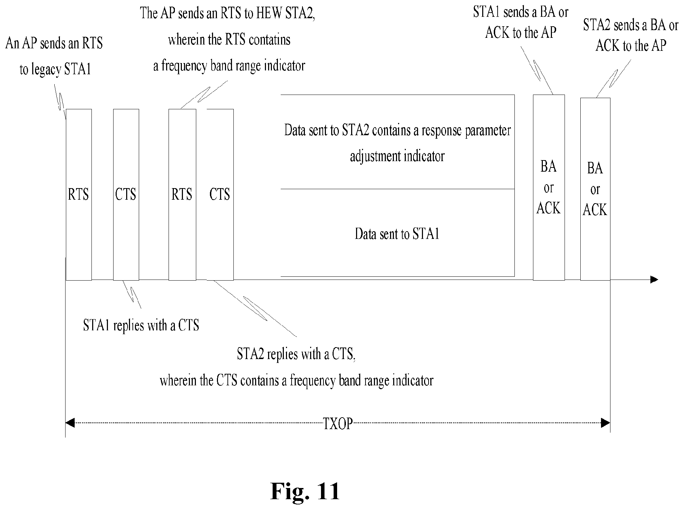

Fig. 11 is a diagram of parallel transmission establishment according to a first example embodiment of the present disclosure, and as shown in Fig. 11, when expecting to use an OFDMA technology to transmit data to STA1 and STA2 in parallel, the AP competes to acquire a TXOP and initiates a parallel transmission establishment process.

The AP sends an RTS frame to STA1, and STA1 replies with a CTS frame after receiving the RTS frame; and then the AP sends an RTS frame to STA2, and the RTS frame contains frequency band range indication information and the frequency band range indication information indicates that a frequency band resource available for data of STA2 during subsequent OFDMA parallel transmission is a secondary channel, and STA2 replies with a CTS frame, and the CTS frame contains the frequency band range indication information to confirm to use the secondary channel. In such a process, the AP and STA2 adopt a reserved indicator bit in a conventional RTS/CTS frame to contain the frequency band range indication information, and specifically adopt a reserved bit in a service field in the RTS/CTS frame. The RTS/CTS frame adopts a conventional frame format, and a sending channel includes the primary channel to enable all the STAs to monitor the RTS/CTS frame. The RTS/CTS frame contains duration indication information used for reserving time to be occupied by a current TXOP. Auditing STAs will not compete for the channel to protect the TXOP after monitoring the information, and an upper time length limit of the TXOP is a TXOP limit corresponding to an AC of sent data of STA1 on the primary channel, and for example, when the data of STA1 belongs to a video AC (AC_VO), the upper time length of the TXOP acquired by the AP is a TXOP limit corresponding to AC_VO. It can be seen that the AP performs RTS/CTS interaction with STA1 and STA2 to protect two links adopted for parallel transmission respectively.

After the abovementioned process is implemented, STA1 waits to receive data on the primary channel, STA2 waits to receive data on the secondary channel, and the AP sends the data to STA1 and STA2 in parallel in an OFDMA manner, and a subcarrier on the primary channel bears the data of STA1, a subcarrier on the secondary channel bears the data of STA2, the data frame sent to STA1 requires an immediate Acknowledgement (ACK)/Block Acknowledgement (BA), and STA1 replies with the ACK /BA after an inter-frame time interval after finishing receiving the data; and the data frame sent to STA2 requires an ACK/BA, the data frame includes an response parameter adjustment indicator, specifically an immediate response sending time point adjustment information, indicating that STA2 replies with the ACK/BA after a time delay T, and the time delay T includes time during STA1 transmits the ACK/BA and a proper inter-frame time interval.

After data reception is finished, STA1 immediately replies with the ACK/BA after the inter-frame time interval, and STA2 replies with the ACK/BA after the time delay T according to the information indicated by the response parameter adjustment indicator.

### Embodiment 2

An AP and multiple non-AP STAs form a BSS, and a running bandwidth of the BSS is 80MHz, including a 20MHz primary channel (supposed to be sub-channel 0) and three 20MHz secondary channels (sub-channels 1, 2 and 3), but STA1 is a legacy STA merely supporting standard 11n and supports a maximum bandwidth of 40MHz and STA2 is an HEW STA supporting OFDMA transmission and a 80MHz bandwidth. Default detection channels of all the STAs at least include the primary channel.

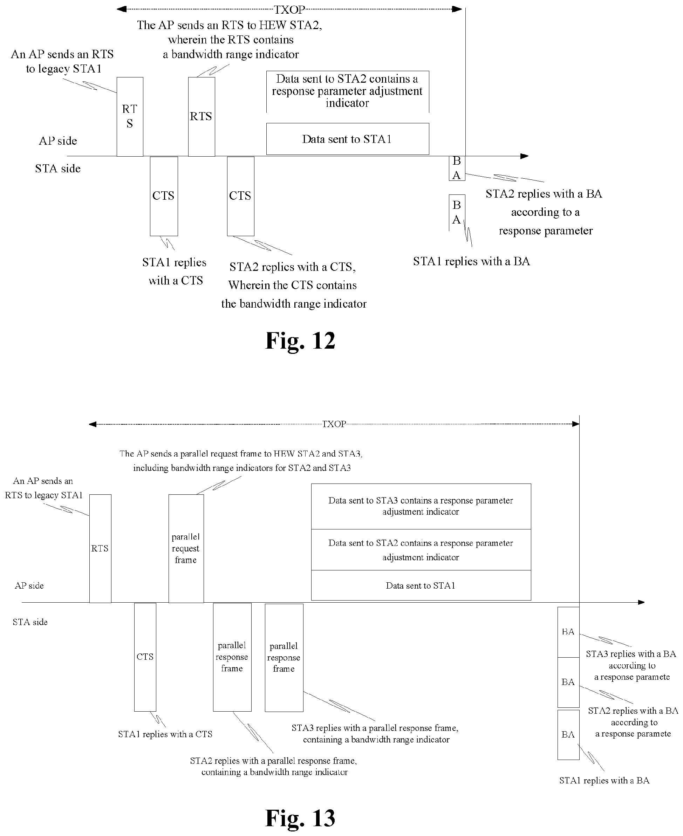

Fig. 12 is a diagram of parallel transmission establishment according to a second example embodiment of the present disclosure, and as shown in Fig. 12, when expecting to use an OFDMA technology to transmit data to STA1 and STA2 in parallel, the AP competes to acquire a TXOP, and initiates a parallel transmission establishment process.

The AP sends an RTS frame to STA1, STA1 replies with a CTS frame after receiving the RTS frame, and STA1 always performs sending and reception on 40MHz including the primary channel; and then the AP sends an RTS frame to STA2, the RTS frame including frequency band range indication information and the frequency band range indication information indicating that a frequency band resource available for data of STA2 during subsequent OFDMA parallel transmission is secondary channels 2 and 3, and STA2 replies with a CTS frame, the CTS frame including the frequency band range indication information to confirm that a channel to be used is channel 3, that is, the AP and STA2 may negotiate the frequency band to be used. It can be seen that the AP performs RTS/CTS interaction with STA1 and STA2 to protect two links adopted for parallel transmission respectively.

After the abovementioned process is implemented, STA1 waits to receive data on the primary channel, STA2 waits to receive data on secondary channel 3, and the AP sends the data to STA1 and STA2 in parallel in an OFDMA manner, and subcarriers on the primary channel and secondary channel 1 bear the data of STA1, a subcarrier on secondary channel 3 bears the data of STA2, the data frame sent to STA1 requires an immediate ACK/BA, and STA1 replies with the BA after an inter-frame time interval after finishing receiving the data; the data frame sent to STA2 requires an immediate BA, the BA of STA2 and the BA of STA1 are send in parallel on different sub-channels, and the data frame sent to STA2 includes an response parameter adjustment indicator, and the response parameter adjustment indicator may specifically include power adjustment information, an immediate response sending time point adjustment information and carrier frequency offset pre-adjustment information, and the response parameter adjustment indicator indicates STA2 to adjust own BA sending time point according to the immediate response sending time point adjustment information. A carrier spectrum for sending the BA is adjusted according to the carrier frequency offset pre-adjustment information and a power for sending the BA is adjusted according to the power adjustment information to ensure that the BA sent by STA2 and the BA sent by STA1 may be transmitted in parallel and correctly received by the AP. All or part of the response parameter adjustment indicators may be positioned in a MAC frame header of the data frame, may specifically be positioned in a reserved bit of the MAC frame header and may be set in an additional information field of the MAC frame header; and all or part of the response parameter adjustment indicators may also be positioned in a physical layer frame header of the data frame.

STA1 immediately replies with the BA on the primary channel and secondary channel 1 after the inter-frame time interval, and STA2 sends the BA on channel 3 according to the response parameter adjustment indicator, that is, a sending frequency band of the BA is the same as a frequency band of own received data.

### Embodiment 3

An AP and multiple non-AP STAs form a BSS, and a running bandwidth of the BSS is 160MHz, including a 20MHz primary channel (supposed to be sub-channel 0) and seven 20MHz secondary channels (sub-channels 1, 2, 3, 4, 5, 6 and 7), but STA1 is a legacy STA merely supporting standard 11ac and supports a maximum bandwidth of 160MHz and STA2 and STA3 are HEW STAs supporting OFDMA transmission and a 160MHz bandwidth. When expecting to use an OFDMA technology to transmit data to STA1, STA2 and STA3 in parallel, the AP competes to acquire a TXOP, and initiates a parallel transmission establishment process.

The AP sends an RTS frame to STA1, indicates that a bandwidth may be dynamically adjusted during communication with STA1 and indicates that a bandwidth available for STA1 is 160MHz; STA1 replies with a CTS frame and indicates that a 40MHz bandwidth is selected for communication with the AP after receiving the RTS frame, and a channel may be determined merely by indicating a bandwidth value in a related art, and for example, the 40MHz bandwidth is a 40MHz bandwidth including the primary channel, i.e. two sub-channels 0 and 1 in the embodiment. Then the AP sends an RTS frame to STA2, and the RTS frame includes frequency band range indication information and the frequency band range indication information indicates a frequency band resource available for data of STA2 during subsequent OFDMA parallel transmission, for example, an information indication method in embodiment 1 may be adopted, that is, channels, i.e. secondary channels 2, 3, 4, 5, 6 and 7, except the channels selected by STA1 are indicated. Then STA2 replies with a CTS frame, and the frame includes frequency band range indication information to confirm the channels to be used are channels 2 and 3, that is, the AP and STA2 may negotiate about frequency bands to be used. Finally, the AP sends an RTS frame to STA3, and the RTS frame includes frequency band range indication information and the frequency band range indication information indicates a frequency band resource available for data of STA3 during subsequent OFDMA parallel transmission, that is, channels, i.e. secondary channels 4, 5, 6 and 7, except the channels selected by STA1 and STA2 are indicated; and STA3 replies with a CTS frame, and the frame includes frequency band range indication information to confirm that channels to be used are channels 4, 5, 6 and 7. It can be seen that the AP performs RTS/CTS interaction with STA1, STA2 and STA3 to protect three links adopted for parallel transmission respectively.

After the abovementioned process is implemented, the AP sends data in parallel in the OFDMA manner, and subcarriers on the primary channel and secondary channel 1 bear data of STA1, subcarriers on secondary channels 2 and 3 bear data of STA2 and subcarriers on secondary channels 4, 5, 6 and 7 bear data of STA3. The data frame sent to STA1 requires an immediate BA, and STA1 replies with the BA after an inter-frame time interval after finishing receiving the data; and the data frames sent to STA2 and STA3 require BAs, that is, STA2 and STA3 reply with BAs for the data frames after receiving Block ACK Request (BAR) sent by the AP.

After the data frames are sent in parallel, STA1 replies with the BA, the AP sends a BAR to STA2 after receiving the BA of STA1, STA2 replies with the BA, then the AP sends a BAR to STA3, and STA3 replies with the BA.

### Embodiment 4

An AP and multiple non-AP STAs form a BSS, and a running bandwidth of the BSS is 160MHz, including a 20MHz primary channel (supposed to be sub-channel 0) and seven 20MHz secondary channels (sub-channels 1, 2, 3, 4, 5, 6 and 7), but STA1 is a legacy STA merely supporting standard 11ac and supports a maximum bandwidth of 160MHz and STA2 and STA3 are HEW STAs supporting OFDMA transmission and a 160MHz bandwidth.

Fig. 13 is a diagram of parallel transmission establishment according to a fourth example embodiment of the present disclosure, and as shown in Fig. 13, the AP may implement a parallel transmission establishment process by virtue of a parallel transmission request frame and a parallel transmission response frame. The parallel transmission request frame and the parallel transmission response frame are newly-defined frame formats, and may not be parsed by the first-type STA, and a method for using these frames may be as follows.

When STAs for multi-user parallel transmission include a first-type STA and a second-type STA, a conventional frame may be adopted to establish transmission link with the first-type STA, then a newly-defined parallel transmission request frame and a response frame may be adopted to establish transmission link with the second-type STA. A RTS/CTS frame is adopted for communication with STA1, the parallel transmission request frame is adopted for communication with STA2 and STA3. Specifically, the AP sends the parallel transmission request frames to STA2 and STA3, the frames contains identification information and frequency band range indication information of STA2 and STA3 respectively, and STA2 and STA3 sequentially reply with the parallel transmission response frames.

When the STAs for multi-user parallel transmission are all second-type STAs, for example, STA2 and ST3, the AP sends the parallel transmission request frames to STA2 and STA3, and the frames include the identification information and frequency band range indication information of STA2 and STA3 respectively, and STA2 and STA3 sequentially reply with the parallel transmission response frames.

### Embodiment 5

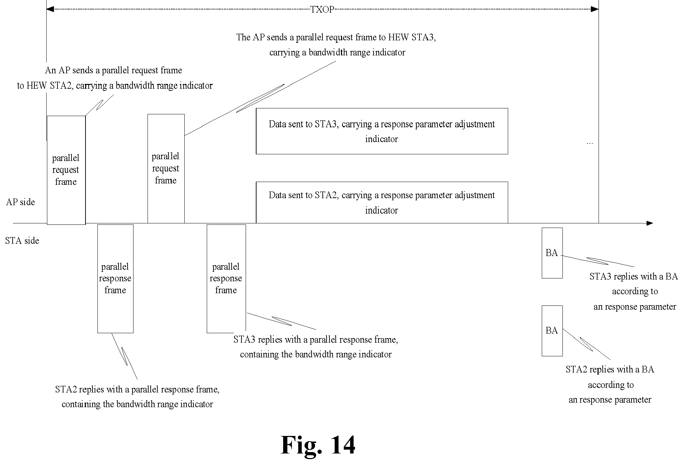

Fig. 14 is a diagram of parallel transmission establishment according to a fifth example embodiment of the present disclosure, and as shown in Fig. 14, an AP may implement a parallel transmission establishment process by virtue of a parallel transmission request frame and a parallel transmission response frame. The parallel transmission request frame and the parallel transmission response frame are newly-defined frame formats, and may not be parsed by a first-type STA, and a method for using these frames may be as follows.

The AP sends a parallel transmission request frame to STA2 and receives a parallel transmission response frame of STA2, and the AP also implements the same process with STA3. The parallel transmission request frame and the response frame include frequency band range indication information.

Obviously, those skilled in the art should know that each component or step of the embodiment of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, the shown or described steps may be executed in sequences different from those described here in some circumstances, or may form each integrated circuit component respectively, or multiple components or steps therein may form a single integrated circuit component for implementation. As a consequence, the present disclosure is not limited to any specific hardware and software combination.

The above is only the preferred embodiment of the present disclosure and not intended to limit the embodiment of the present disclosure, and for those skilled in the art, the present disclosure may have various modifications and variations, within the scope of the attached claims.

### Industrial Applicability

As mentioned above, according to the embodiments and example implementation modes, the problem that an effective parallel transmission link may not be established due to own characteristics of a WLAN in the related art and it is consequently impossible to directly implement parallel transmission in the WLAN is solved, and the effects of effectively avoiding interference to parallel transmission, effectively achieving compatibility with new and old equipment of the network and effectively improving efficiency of the network are further achieved.

## Claims

1. A method for processing parallel transmission, comprising:
a primary node in a Wireless Local Area Network ,WLAN, determining node types of multiple secondary nodes used for parallel transmission, wherein the node types comprise: a first-type secondary node not supporting the parallel message processing, and a second-type secondary node supporting the parallel message processing (S202);
the primary node determining, according to the determined node types, a resource negotiation manner used for negotiating resources of each secondary node for the parallel transmission (S204);
the primary node determining corresponding resources corresponding to the multiple secondary nodes respectively according to the determined resource negotiation manner (S206); and
the primary node performing parallel transmission processing on the multiple secondary nodes according to the corresponding resources (S208).

2. The method as claimed in claim 1, wherein determining, according to the determined node types, the resource negotiation manner used for negotiating the resources of each secondary node for the parallel transmission (S204) comprises at least one of:
when the node types of the multiple secondary nodes further comprise the first-type secondary node not supporting the parallel message processing, determining that a resource negotiation manner of respective independent resource negotiation is adopted for the first-type secondary node and the second-type secondary node;
when the node types of the multiple secondary nodes merely comprise the second-type secondary nodes supporting the parallel message processing, determining that a resource negotiation manner of respective independent resource negotiation is adopted for the second-type secondary nodes; and
when the node types of the multiple secondary nodes merely comprise the second-type secondary nodes supporting the parallel message processing, determining that a resource negotiation manner of simultaneous parallel negotiation is adopted for the second-type secondary nodes.

3. The method as claimed in claim 2, wherein,
when the node types of the multiple secondary nodes further comprise the first-type secondary node not supporting the parallel message processing, determining the corresponding resources corresponding to the multiple secondary nodes respectively according to the determined resource negotiation manner comprises:
sending, after corresponding resources of the first-type secondary node on a primary channel is determined, to the second-type secondary node a request message used for requesting for data transmission, wherein the request message sent to the second-type secondary node carries first resource range information of resources except the resources occupied by the first-type secondary node; and determining corresponding resources of the second-type secondary node according to a response message fed back by the second-type secondary node, wherein the response message fed back by the second-type secondary node carries information of corresponding resources of the second-type secondary node, wherein the corresponding resources of the second-type secondary node is selected by the second-type secondary node;
or,
when the node types of the multiple secondary nodes merely comprise the second-type secondary nodes supporting the parallel message processing, determining the corresponding resources corresponding to the multiple secondary nodes respectively according to the determined resource negotiation manner comprises: sending a request message used for requesting for data transmission to the second-type secondary node, wherein the request message carries second resource range information of resources for the second-type secondary node to select for parallel transmission; and determining corresponding resources of the second-type secondary node according to received response message sent by the second-type secondary node, wherein the response message carries information of the corresponding resources selected by the second-type secondary node according to the second resource range information.

4. The method as claimed in claim 3, wherein when the node types of the multiple secondary nodes further comprise the first-type secondary node not supporting the parallel message processing,
the request message sent to the second-type secondary node comprises at least one of: a unicast Request To Send, RTS, frame, a unicast predetermined frame and a multicast predetermined frame, wherein a reserved indicator bit in the unicast RTS frame indicates the carried first resource range information, and an information field of the unicast predetermined frame or the multicast predetermined frame indicates the carried first resource range information; and
the response message fed back by the second-type secondary node comprises a unicast Clear To Send, CTS, frame or a unicast predetermined response frame, wherein a reserved indicator bit in the CTS frame fed back by the second-type secondary node indicates the carried information of corresponding resources selected by the second-type secondary node, and an information field of the unicast predetermined response frame indicates the carried information of corresponding resources selected by the second-type secondary node.

5. The method as claimed in claim 3, wherein determining the corresponding resources corresponding to the multiple secondary nodes respectively according to the determined resource negotiation manner further comprises:
determining that resources corresponding to the first-type secondary node comprises primary channel resources, wherein transmission time of parallel transmission on a secondary channel is determined by data transmission time on the primary channel.

6. The method as claimed in claim 3, wherein when the node types of the multiple secondary nodes merely comprise the second-type secondary nodes supporting the parallel message processing,
the request message sent to the second-type secondary node comprises at least one of: a unicast RTS frame, a unicast predetermined frame and a multicast predetermined frame, wherein a reserved indicator bit in the RTS frame indicates the carried second resource range information, and an information field of the unicast predetermined frame/the multicast predetermined frame indicates the second resource range information for parallel transmission of the second-type secondary node; and
the response message fed back by the second-type secondary node comprises a unicast CTS frame or a unicast predetermined response frame, wherein a reserved indicator bit in the CTS frame indicates the carried information of the corresponding resources selected by the second-type secondary node, and an information field of the unicast predetermined response frame indicates the carried information of corresponding resources selected by the second-type secondary node.

7. The method as claimed in claim 1, wherein performing parallel transmission processing on the multiple secondary nodes according to the corresponding resources (S208) comprises:
sending corresponding data to the multiple secondary nodes at a same time by adopting different corresponding resources, wherein each piece of data sent to the second-type secondary node carries response parameter adjustment indication information used for adjusting response parameters of the corresponding secondary node responding to the data.

8. The method as claimed in claim 7, before sending the corresponding data to the multiple secondary nodes at the same time by adopting different corresponding resources, further comprising:
acquiring response parameters corresponding to the multiple secondary nodes, wherein the response parameter adjustment indication information takes a parameter of the first-type secondary node as a criterion when the multiple secondary nodes further comprise the first-type secondary node not supporting parallel message processing.

9. The method as claimed in claim 7, wherein the response parameter adjustment indication information comprises at least one of:
power adjustment information used for adjusting a power of sending the response information, immediate response sending time point adjustment information used for adjusting a sending time point of the response information, and carrier frequency offset pre-adjustment information used for adjusting a carrier frequency of sending the response information.

10. The method as claimed in any one of claims 1 to 9, wherein the corresponding resources comprise at least one of:
frequency-domain resources, code division resources and space-domain resources.

11. The method as claimed in any one of claims 3 to 6, wherein, when the corresponding resources are frequency-domain resources, the first resource range information and the second resource range information respectively comprise at least one of:
a starting position and bandwidth information of a frequency band;
a temporary primary channel position and bandwidth information of the frequency band;
the temporary primary channel position of the frequency band; and
sub-channel list information.

12. A primary node device, adapted to operate in a Wireless Local Area Network, WLAN, comprising:
a first determination component (32), configured to determine node types of multiple secondary nodes used for parallel transmission, wherein the node types comprise: a first-type secondary node not supporting the parallel message processing, and a second-type secondary node supporting the parallel message processing;
a second determination component (34), configured to determine, according to the determined node types, a resource negotiation manner used for negotiating resources of each secondary node for the parallel transmission;
a third determination component (36), configured to determine corresponding resources corresponding to the multiple secondary nodes respectively according to the determined resource negotiation manner; and
a processing component (38), configured to perform parallel transmission processing on the multiple secondary nodes according to the corresponding resources.

13. The device as claimed in claim 12, wherein the second determination component (34) comprises at least one of:
a first determination element (42), configured to, when the node types of the multiple secondary nodes further comprise the first-type secondary node not supporting the parallel message processing, determine that a resource negotiation manner of respective independent resource negotiation is adopted for the first-type secondary node and the second-type secondary node;
a second determination element (44), configured to, when the node types of the multiple secondary nodes merely comprise the second-type secondary nodes supporting the parallel message processing, determine that a resource negotiation manner of respective independent resource negotiation is adopted for the second-type secondary nodes; and
a third determination element (46), configured to, when the node types of the multiple secondary nodes merely comprise the second-type secondary nodes supporting the parallel message processing, determine that a resource negotiation manner of simultaneous parallel negotiation is adopted for the second-type secondary nodes.

14. The device as claimed in claim 12, wherein
the third determination component (36) comprises:
a first sending element (52), configured to, when the node types of the multiple secondary nodes further comprise the first-type secondary node not supporting the parallel message processing, send, after corresponding resources of the first-type secondary node on a primary channel is determined, to the second-type secondary node a request message used for requesting for data transmission, wherein the request message sent to the second-type secondary node carries first resource range information of resources except the resources occupied by the first-type secondary node; and
a fourth determination element (54), configured to determine corresponding resources of the second-type secondary node according to the response message fed back by the second-type secondary node, wherein the response message fed back by the second-type secondary node carries information of corresponding resources of the second-type secondary node, wherein the corresponding resources of the second-type secondary node is selected by the second-type secondary node;
or,
the third determination component (36) comprises:
a second sending element (72), configured to, when the node types of the multiple secondary nodes merely comprise the second-type secondary nodes supporting the parallel message processing, send a request message used for requesting for data transmission to the second-type secondary node, wherein the request message carries second resource range information of resources for the second-type secondary node to select for parallel transmission; and a sixth determination element (74), configured to determine corresponding resources of the second-type secondary node according to received response message sent by the second-type secondary node, wherein the response message carries information of the corresponding resources selected by the second-type secondary node according to the second resource range information.

15. The device as claimed in claim 14, wherein the third determination component (36) further comprises:
a fifth determination element (62), configured to determine that the resources corresponding to the first-type secondary node comprises primary channel resources, wherein transmission time of parallel transmission on a secondary channel is determined by data transmission time on the primary channel.

16. The device as claimed in claim 12, wherein the processing component (38) comprises:
a third sending element (82), configured to send corresponding data to the multiple secondary nodes at a same time by adopting different corresponding resources, wherein each piece of data sent to the second-type secondary node carries response parameter adjustment indication information used for adjusting response parameters of the corresponding secondary node responding to the data.

17. The device as claimed in claim 16, further comprising:
an acquisition element (92), configured to acquire response parameters corresponding to the multiple secondary nodes, wherein the response parameter adjustment indication information takes a response parameter of the first-type secondary node as a criterion when the multiple secondary nodes further comprise the first-type secondary node not supporting parallel message processing.

18. Equipment for processing parallel transmission, comprising the device as claimed in any one of claims 12 to 17.

19. A computer program product comprising code means adapted to perform all the steps of the method as claimed in any of claims 1 to 11, when executed by a primary node in a Wireless Local Area Network.

## Patentansprüche

1. Verfahren zum Verarbeiten von paralleler Übertragung, umfassend:
Bestimmen, durch einen Primärknoten in einem Wireless Local Area Network, WLAN, von Knotentypen mehrerer Sekundärknoten, die zur parallelen Übertragung verwendet werden, wobei die Knotentypen umfassen: einen Sekundärknoten eines ersten Typs, der die parallele Nachrichtenverarbeitung nicht unterstützt, und einen Sekundärknoten eines zweiten Typs, der die parallele Nachrichtenverarbeitung unterstützt (S202);
Bestimmen, durch den Primärknoten gemäß den bestimmten Knotentypen, einer Ressourcenverhandlungsweise, die zum Verhandeln von Ressourcen jedes Sekundärknotens für die parallele Übertragung verwendet wird (S204);
Bestimmen, durch den Primärknoten, von entsprechenden Ressourcen, die den mehreren Sekundärknoten entsprechen, jeweils gemäß der bestimmten Ressourcenverhandlungsweise (S206); und
Durchführen, durch den Primärknoten, von paralleler Übertragungsverarbeitung an den mehreren Sekundärknoten gemäß den entsprechenden Ressourcen (S208).

2. Verfahren nach Anspruch 1, wobei das Bestimmen, gemäß den bestimmten Knotentypen, der Ressourcenverhandlungsweise, die zum Verhandeln der Ressourcen jedes Sekundärknotens für die parallele Übertragung verwendet wird (S204), mindestens eines umfasst aus:
wenn die Knotentypen der mehreren Sekundärknoten weiter den Sekundärknoten des ersten Typs umfassen, der die parallele Nachrichtenverarbeitung nicht unterstützt, Bestimmen, dass eine Ressourcenverhandlungsweise von jeweils unabhängiger Ressourcenverhandlung für den Sekundärknoten des ersten Typs und den Sekundärknoten des zweiten Typs übernommen wird;
wenn die Knotentypen der mehreren Sekundärknoten ausschließlich Sekundärknoten des zweiten Typs umfassen, der die parallele Nachrichtenverarbeitung unterstützt, Bestimmen, dass eine Ressourcenverhandlungsweise von jeweils unabhängiger Ressourcenverhandlung für die Sekundärknoten des zweiten Typs übernommen wird; und
wenn die Knotentypen der mehreren Sekundärknoten ausschließlich Sekundärknoten des zweiten Typs umfassen, der die parallele Nachrichtenverarbeitung unterstützt, Bestimmen, dass eine Ressourcenverhandlungsweise von simultaner paralleler Verhandlung für die Sekundärknoten des zweiten Typs übernommen wird.

3. Verfahren nach Anspruch 2, wobei
wenn die Knotentypen der mehreren Sekundärknoten weiter den Sekundärknoten des ersten Typs umfassen, der die parallele Nachrichtenverarbeitung nicht unterstützt, das Bestimmen der entsprechenden Ressourcen, die den mehreren Sekundärknoten entsprechen, jeweils gemäß der bestimmten Ressourcenverhandlungsweise umfasst:
Senden, nachdem entsprechende Ressourcen des Sekundärknotens des ersten Typs auf einem Primärkanal bestimmt sind, einer Anfragenachricht an den Sekundärknoten des zweiten Typs, die zum Anfragen bezüglich Datenübertragung verwendet wird, wobei die an den Sekundärknoten des zweiten Typs gesendete Anfragenachricht erste Ressourcenbereichsinformationen bezüglich Ressourcen, ausgenommen der Ressourcen übermittelt, die vom Sekundärknoten des ersten Typs belegt werden; und Bestimmen von entsprechenden Ressourcen des Sekundärknotens des zweiten Typs gemäß einer vom Sekundärknoten des zweiten Typs zurückgegeben Antwortnachricht, wobei die vom Sekundärknoten des zweiten Typs zurückgegebene Antwortnachricht Informationen bezüglich entsprechender Ressourcen des Sekundärknotens des zweiten Typs übermittelt, wobei die entsprechenden Ressourcen des Sekundärknotens des zweiten Typs vom Sekundärknoten des zweiten Typs ausgewählt werden;
oder
wenn die Knotentypen der mehreren Sekundärknoten ausschließlich Sekundärknoten des zweiten Typs umfassen, der die parallele Nachrichtenverarbeitung unterstützt, das Bestimmen der entsprechenden Ressourcen, die den mehreren Sekundärknoten entsprechen, jeweils gemäß der bestimmten Ressourcenverhandlungsweise umfasst: Senden einer Anfragenachricht, die zum Anfragen bezüglich Datenübertragung verwendet wird, an den Sekundärknoten des zweiten Typs, wobei die Anfragenachricht zweite Ressourcenbereichsinformationen bezüglich Ressourcen für den Sekundärknoten des zweiten Typs übermittelt, die zur parallelen Übertragung auszuwählen sind; und Bestimmen von entsprechenden Ressourcen des Sekundärknotens des zweiten Typs gemäß empfangener Antwortnachricht, die vom Sekundärknoten des zweiten Typs gesendet wurde, wobei die Antwortnachricht Informationen bezüglich der entsprechenden Ressourcen übermittelt, die vom Sekundärknoten des zweiten Typs gemäß den zweiten Ressourcenbereichsinformationen ausgewählt wurden.

4. Verfahren nach Anspruch 3, wobei, wenn die Knotentypen der mehreren Sekundärknoten weiter den Sekundärknoten des ersten Typs umfassen, der die parallele Nachrichtenverarbeitung nicht unterstützt,
die an den Sekundärknoten des zweiten Typs gesendete Anfragenachricht mindestens eines umfasst aus: einem Unicast Request To Send-, RTS, Frame, einem vorbestimmten Unicast-Frame und einem vorbestimmten Multicast-Frame, wobei ein reserviertes Anzeigebit im Unicast-RTS-Frame die übermittelten ersten Ressourcenbereichsinformationen anzeigt, und ein Informationsfeld des vorbestimmten Unicast-Frames oder des vorbestimmten Multicast-Frames die übermittelten ersten Ressourcenbereichsinformationen anzeigt; und
die vom Sekundärknoten des zweiten Typs zurückgegebene Antwortnachricht einen Unicast Clear To Send-, CTS, Frame oder einen vorbestimmten Unicast-Antwort-Frame umfasst, wobei ein reserviertes Anzeigebit im vom Sekundärknoten des zweiten Typs zurückgegebenen CTS-Frame die übermittelten Informationen bezüglich entsprechender Ressourcen anzeigt, die vom Sekundärknoten des zweiten Typs ausgewählt wurden, und ein Informationsfeld des vorbestimmten Unicast-Antwort-Frames die übermittelten Informationen bezüglich entsprechender Ressourcen anzeigt, die vom Sekundärknoten des zweiten Typs ausgewählt wurden.

5. Verfahren nach Anspruch 3, wobei das Bestimmen der entsprechenden Ressourcen, die den mehreren Sekundärknoten entsprechen, jeweils gemäß der bestimmten Ressourcenverhandlungsweise weiter umfasst:
Bestimmen, dass Ressourcen, die dem Sekundärknoten des ersten Typs entsprechen, Primärkanalressourcen umfassen, wobei Übertragungszeit von paralleler Übertragung auf einem Sekundärkanal von Datenübertragungszeit auf dem Primärkanal bestimmt wird.

6. Verfahren nach Anspruch 3, wobei, wenn die Knotentypen der mehreren Sekundärknoten ausschließlich Sekundärknoten des zweiten Typs umfassen, der die parallele Nachrichtenverarbeitung unterstützt,
die an den Sekundärknoten des zweiten Typs gesendete Anfragenachricht mindestens eines umfasst aus: einem Unicast-RTS-Frame, einem vorbestimmten Unicast-Frame und einem vorbestimmten Multicast-Frame, wobei ein reserviertes Anzeigebit im RTS-Frame die übermittelten zweiten Ressourcenbereichsinformationen anzeigt, und ein Informationsfeld des vorbestimmten Unicast-Frames/des vorbestimmten Multicast-Frames die zweiten Ressourcenbereichsinformationen für parallele Übertragung des Sekundärknotens des zweiten Typs anzeigt; und
die vom Sekundärknoten des zweiten Typs zurückgegebene Antwortnachricht einen Unicast-CTS-Frame oder einen vorbestimmten Unicast-Antwort-Frame umfasst, wobei ein reserviertes Anzeigebit im CTS-Frame die übermittelten Informationen bezüglich der entsprechenden Ressourcen anzeigt, die vom Sekundärknoten des zweiten Typs ausgewählt wurden, und ein Informationsfeld des vorbestimmten Unicast-Antwort-Frames die übermittelten Informationen bezüglich entsprechender Ressourcen anzeigt, die vom Sekundärknoten des zweiten Typs ausgewählt wurden.

7. Verfahren nach Anspruch 1, wobei das Durchführen von paralleler Übertragungsverarbeitung an den mehreren Sekundärknoten gemäß den entsprechenden Ressourcen (S208) umfasst:
Senden von entsprechenden Daten zu ein und derselben Zeit an die mehreren Sekundärknoten durch Übernehmen verschiedener entsprechender Ressourcen, wobei jeder Datenteil, der an den Sekundärknoten des zweiten Typs gesendet wird, Antwortparameteranpassungs-Anzeigeinformationen übermittelt, die zum Anpassen von Antwortparametern des entsprechenden Sekundärknotens, der auf die Daten antwortet, verwendet werden.

8. Verfahren nach Anspruch 7, das vor dem Senden der entsprechenden Daten zur selben Zeit an die mehreren Sekundärknoten durch Übernehmen verschiedener entsprechender Ressourcen weiter umfasst:
Beziehen von Antwortparametern, die den mehreren Sekundärknoten entsprechen, wobei die Antwortparameteranpassungs-Anzeigeinformationen einen Parameter des Sekundärknotens des ersten Typs als ein Kriterium hernehmen, wenn die mehreren Sekundärknoten weiter den Sekundärknoten des ersten Typs umfassen, der parallele Nachrichtenverarbeitung nicht unterstützt.

9. Verfahren nach Anspruch 7, wobei die Antwortparameteranpassungs-Anzeigeinformationen mindestens eines umfassen aus:
Leistungsanpassungsinformationen, die zum Anpassen einer Sendeleistung der Antwortinformationen verwendet werden, unmittelbare Antwortsendezeitpunkt-Anpassungsinformationen, die zum Anpassen eines Sendezeitpunkts der Antwortinformationen verwendet werden, und Trägerfrequenzoffset-Voranpassungsinformationen, die zum Anpassen einer Trägersendefrequenz der Antwortinformationen verwendet werden.

10. Verfahren nach einem der Ansprüche 1 bis 9, wobei die entsprechenden Ressourcen mindestens eines umfassen aus:
Frequenzdomänenressourcen, Codeverteilungsressourcen und Raumdomänenressourcen.

11. Verfahren nach einem der Ansprüche 3 bis 6, wobei, wenn die entsprechenden Ressourcen Frequenzdomänenressourcen sind, die ersten Ressourcenbereichsinformationen und die zweiten Ressourcenbereichsinformationen jeweils mindestens eines umfassen aus:
einer Anfangsposition und Bandbreiteninformationen eines Frequenzbandes;
einer temporären Primärkanalposition und Bandbreiteninformationen des Frequenzbandes;
der temporären Primärkanalposition des Frequenzbandes; und
Subkanallisten-Informationen.

12. Primärknotenvorrichtung, die dazu ausgebildet ist, in einem Wireless Local Area Network, WLAN, zu funktionieren, umfassend:
eine erste Bestimmungskomponente (32), die dazu eingerichtet ist, Knotentypen von mehreren Sekundärknoten zu bestimmen, die zur parallelen Übertragung verwendet werden, wobei die Knotentypen umfassen: einen Sekundärknoten eines ersten Typs, der die parallele Nachrichtenverarbeitung nicht unterstützt, und einen Sekundärknoten eines zweiten Typs, der die parallele Nachrichtenverarbeitung unterstützt;
eine zweite Bestimmungskomponente (34), die dazu eingerichtet ist, gemäß den bestimmten Knotentypen eine Ressourcenverhandlungsweise zu bestimmen, die zum Verhandeln von Ressourcen jedes Sekundärknotens für die parallele Übertragung verwendet wird;
eine dritte Bestimmungskomponente (36), die dazu eingerichtet ist, entsprechende Ressourcen, die den mehreren Sekundärknoten entsprechen, jeweils gemäß der bestimmten Ressourcenverhandlungsweise zu bestimmen; und
eine Verarbeitungskomponente (38), die dazu eingerichtet ist, parallele Übertragungsverarbeitung an den mehreren Sekundärknoten gemäß den entsprechenden Ressourcen durchzuführen.

13. Vorrichtung nach Anspruch 12, wobei die zweite Bestimmungskomponente (34) mindestens eines umfasst aus:
einem ersten Bestimmungselement (42), das dazu eingerichtet ist, wenn die Knotentypen der mehreren Sekundärknoten weiter den Sekundärknoten des ersten Typs umfassen, der die parallele Nachrichtenverarbeitung nicht unterstützt, zu bestimmen, dass eine Ressourcenverhandlungsweise von jeweils unabhängiger Ressourcenverhandlung für den Sekundärknoten des ersten Typs und den Sekundärknoten des zweiten Typs übernommen wird;
einem zweiten Bestimmungselement (44), das dazu eingerichtet ist, wenn die Knotentypen der mehreren Sekundärknoten ausschließlich Sekundärknoten des zweiten Typs umfassen, der die parallele Nachrichtenverarbeitung unterstützt, zu bestimmen, dass eine Ressourcenverhandlungsweise von jeweils unabhängiger Ressourcenverhandlung für die Sekundärknoten des zweiten Typs übernommen wird; und
einem dritten Bestimmungselement (46), das dazu eingerichtet ist, wenn die Knotentypen der mehreren Sekundärknoten ausschließlich Sekundärknoten des zweiten Typs umfassen, der die parallele Nachrichtenverarbeitung unterstützt, zu bestimmen, dass eine Ressourcenverhandlungsweise von simultaner paralleler Verhandlung für die Sekundärknoten des zweiten Typs übernommen wird.

14. Vorrichtung nach Anspruch 12, wobei die dritte Bestimmungskomponente (36) umfasst:
ein erstes Sendeelement (52), das dazu eingerichtet ist, wenn die Knotentypen der mehreren Sekundärknoten weiter den Sekundärknoten des ersten Typs umfassen, der die parallele Nachrichtenverarbeitung nicht unterstützt, nachdem entsprechende Ressourcen des Sekundärknotens des ersten Typs auf einem Primärkanal bestimmt sind, eine Anfragenachricht an den Sekundärknoten des zweiten Typs zu senden, die zum Anfragen bezüglich Datenübertragung verwendet wird, wobei die an den Sekundärknoten des zweiten Typs gesendete Anfragenachricht erste Ressourcenbereichsinformationen bezüglich Ressourcen, ausgenommen der Ressourcen übermittelt, die vom Sekundärknoten des ersten Typs belegt werden; und
ein viertes Bestimmungselement (54), das dazu eingerichtet ist, entsprechende Ressourcen des Sekundärknotens des zweiten Typs gemäß der vom Sekundärknoten des zweiten Typs zurückgegebenen Antwortnachricht zu bestimmen, wobei die vom Sekundärknoten des zweiten Typs zurückgegebene Antwortnachricht Informationen bezüglich entsprechender Ressourcen des Sekundärknotens des zweiten Typs übermittelt, wobei die entsprechenden Ressourcen des Sekundärknotens des zweiten Typs vom Sekundärknoten des zweiten Typs ausgewählt werden;
oder
die dritte Bestimmungskomponente (36) umfasst:
ein zweites Sendeelement (72), das dazu eingerichtet ist, wenn die Knotentypen der mehreren Sekundärknoten ausschließlich Sekundärknoten des zweiten Typs umfassen, der die parallele Nachrichtenverarbeitung unterstützt, eine Anfragenachricht, die zum Anfragen bezüglich Datenübertragung verwendet wird, an den Sekundärknoten des zweiten Typs zu senden, wobei die Anfragenachricht zweite Ressourcenbereichsinformationen bezüglich Ressourcen für den Sekundärknoten des zweiten Typs übermittelt, die zur parallelen Übertragung auszuwählen sind; und ein sechstes Bestimmungselement (74), das dazu eingerichtet ist, entsprechende Ressourcen des Sekundärknotens des zweiten Typs gemäß empfangener Antwortnachricht zu bestimmen, die vom Sekundärknoten des zweiten Typs gesendet wurde, wobei die Antwortnachricht Informationen bezüglich der entsprechenden Ressourcen übermittelt, die vom Sekundärknoten des zweiten Typs gemäß den zweiten Ressourcenbereichsinformationen ausgewählt wurden.

15. Vorrichtung nach Anspruch 14, wobei die dritte Bestimmungskomponente (36) weiter umfasst:
ein fünftes Bestimmungselement (62), das dazu eingerichtet ist, zu bestimmen, dass die Ressourcen, die dem Sekundärknoten des ersten Typs entsprechen, Primärkanalressourcen umfassen, wobei Übertragungszeit von paralleler Übertragung auf einem Sekundärkanal von Datenübertragungszeit auf dem Primärkanal bestimmt wird.

16. Vorrichtung nach Anspruch 12, wobei die Verarbeitungskomponente (38) umfasst:
ein drittes Sendeelement (82), das dazu eingerichtet ist, entsprechende Daten zu ein und derselben Zeit an die mehreren Sekundärknoten zu senden durch Übernehmen verschiedener entsprechender Ressourcen, wobei jeder Datenteil, der an den Sekundärknoten des zweiten Typs gesendet wird, Antwortparameteranpassungs-Anzeigeinformationen übermittelt, die zum Anpassen von Antwortparametern des entsprechenden Sekundärknotens, der auf die Daten antwortet, verwendet werden.

17. Vorrichtung nach Anspruch 16, weiter umfassend:
ein Bezugselement (92), das dazu eingerichtet ist, Antwortparameter, die den mehreren Sekundärknoten entsprechen, zu beziehen, wobei die Antwortparameteranpassungs-Anzeigeinformationen einen Antwortparameter des Sekundärknotens des ersten Typs als ein Kriterium hernehmen, wenn die mehreren Sekundärknoten weiter den Sekundärknoten des ersten Typs umfassen, der parallele Nachrichtenverarbeitung nicht unterstützt.

18. Gerät zur Verarbeitung von paralleler Übertragung, das die Vorrichtung nach einem der Ansprüche 12 bis 17 umfasst.

19. Computerprogrammprodukt, das Codemittel umfasst, die dazu ausgebildet sind, alle die Schritte des Verfahrens nach einem der Ansprüche 1 bis 11 durchzuführen, wenn sie von einem Primärknoten in einem Wireless Local Area Network ausgeführt werden.

## Revendications

1. Procédé de traitement de transmission parallèle, comprenant :
la détermination par un noeud primaire dans un réseau local sans fil, WLAN, de types de noeuds de multiples noeuds secondaires utilisés pour une transmission parallèle, dans lequel les types de noeuds comprennent : un noeud secondaire de premier type ne prenant pas en charge le traitement de message parallèle et un noeud secondaire de second type prenant en charge le traitement de message parallèle (S202) ;
la détermination par le noeud primaire, selon les types de noeuds déterminés, d'une manière de négociation de ressource utilisée pour négocier des ressources de chaque noeud secondaire pour la transmission parallèle (S204) ;
la détermination par le noeud primaire de ressources correspondantes correspondant respectivement aux multiples noeuds secondaires selon la manière de négociation de ressource déterminée (S206) ; et
la réalisation par le noeud primaire d'un traitement de transmission parallèle sur les multiples noeuds secondaires selon les ressources correspondantes (S208).

2. Procédé selon la revendication 1, dans lequel la détermination, selon les types de noeuds déterminés, de la manière de négociation de ressource utilisée pour négocier les ressources de chaque noeud secondaire pour la transmission parallèle (S204) comprend au moins un parmi :
lorsque les types de noeuds des multiples noeuds secondaires comprennent en outre le noeud secondaire de premier type ne prenant en charge le traitement de message parallèle, le fait de déterminer qu'une manière de négociation de ressource d'une négociation de ressource indépendante respective est adoptée pour le noeud secondaire de premier type et pour le noeud secondaire de second type ;
lorsque les types de noeuds des multiples noeuds secondaires comprennent uniquement les noeuds secondaires de second type prenant en charge le traitement de message parallèle, le fait de déterminer qu'une manière de négociation de ressource de négociation de ressource indépendante respective est adoptée pour les noeuds secondaires de second type ; et
lorsque les types de noeuds des multiples noeuds secondaires comprennent uniquement les noeuds secondaires de second type prenant en charge le traitement de message parallèle, le fait de déterminer qu'une manière de négociation de ressource d'une négociation parallèle simultanée est adoptée pour les noeuds secondaires de second type.

3. Procédé selon la revendication 2, dans lequel, lorsque les types de noeuds des multiples noeuds secondaires comprennent en outre le noeud secondaire de premier type ne prenant pas en charge le traitement de message parallèle, la détermination des ressources correspondantes correspondant aux multiples noeuds secondaires respectivement selon la manière de négociation de ressource déterminée comprend :
l'envoi, après que des ressources correspondantes du noeud secondaire de premier type sur un canal primaire sont déterminées, au noeud secondaire de second type d'un message de demande utilisée pour demander une transmission de données, dans lequel le message de demande envoyé au noeud secondaire de second type transporte des premières informations de gamme de ressources pour des ressources à l'exception des ressources occupées par le noeud secondaire de premier type ; et
la détermination de ressources correspondantes du noeud secondaire de second type selon un message de réponse renvoyé par le noeud secondaire de second type, dans lequel le message de réponse renvoyé par le noeud secondaire de second type transporte des informations de ressources correspondantes du noeud secondaire de second type, dans lequel les ressources correspondantes du noeud secondaire de second type sont sélectionnées par le noeud secondaire de second type ;
ou,
lorsque les types de noeuds des multiples noeuds secondaires comprennent uniquement les noeuds secondaires de second type prenant en charge le traitement de message parallèle, la détermination des ressources correspondantes correspondant respectivement aux multiples noeuds secondaires selon la manière de négociation de ressource déterminée comprend : l'envoi d'un message de demande utilisé pour demander une transmission de données vers le noeud secondaire de second type, dans lequel le message de demande transporte des secondes informations de gamme de ressources pour des ressources pour le noeud secondaire de second type pour sélectionner une transmission parallèle ; et la détermination de ressources correspondantes du noeud secondaire de second type selon le message de réponse reçu envoyé par le noeud secondaire de second type, dans lequel le message de réponse transporte des informations des ressources correspondantes sélectionnées par le noeud secondaire de second type selon les secondes informations de gamme de ressources.

4. Procédé selon la revendication 3, dans lequel, lorsque les types de noeuds des multiples noeuds secondaires comprennent en outre le noeud secondaire de premier type ne prenant pas en charge le traitement de message parallèle,
le message de demande envoyé au noeud secondaire de second type comprend au moins un parmi : une trame RTS (demande pour émettre) d'unidiffusion, une trame prédéterminée d'unidiffusion et une trame prédéterminée de multidiffusion, dans lequel un bit d'indicateur réservé dans la trame RTS d'unidiffusion indique les premières informations transportées de gamme de ressources, et un champ d'information de la trame prédéterminée d'unidiffusion ou de la trame prédéterminée de multidiffusion indique les premières informations transportées de gamme de ressources ; et
le message de réponse renvoyé par le noeud secondaire de second type comprend une trame CTS (prêt à émettre) d'unidiffusion ou une trame de réponse prédéterminée d'unidiffusion, dans lequel un bit d'indicateur réservé dans la trame CTS renvoyée par le noeud secondaire de second type indique les informations transportées de ressources correspondantes sélectionnées par le noeud secondaire de second type, et un champ d'information de la trame de réponse prédéterminée d'unidiffusion indique les informations transportées de ressources correspondantes sélectionnées par le noeud secondaire de second type.

5. Procédé selon la revendication 3, dans lequel la détermination des ressources correspondantes correspondant respectivement aux multiples noeuds secondaires selon la manière de négociation de ressource déterminée comprend en outre :
le fait de déterminer que des ressources correspondant au noeud secondaire de premier type comprennent des ressources de canal primaire, dans lequel un temps de transmission d'une transmission parallèle sur un canal secondaire est déterminé par un temps de transmission de données sur le canal primaire.

6. Procédé selon la revendication 3, dans lequel, lorsque les types de noeuds des multiples noeuds secondaires comprennent uniquement les noeuds secondaires de second type prenant en charge le traitement de message parallèle,
le message de demande envoyé au noeud secondaire de second type comprend au moins une parmi : une trame RTS d'unidiffusion, une trame prédéterminée d'unidiffusion et une trame prédéterminée de multidiffusion, dans lequel un bit d'indicateur réservé dans la trame RTS indique les secondes informations transportées de gamme de ressources, et un champ d'information de la trame prédéterminée d'unidiffusion/de la trame prédéterminée de multidiffusion indique les secondes informations de gamme de ressources pour une transmission parallèle du noeud secondaire de second type ; et
le message de réponse renvoyé par le noeud secondaire de second type comprend une trame CTS d'unidiffusion ou une trame de réponse prédéterminée d'unidiffusion, dans lequel un bit d'indicateur réservé dans la trame CTS indique les informations transportées des ressources correspondantes sélectionnées par le noeud secondaire de second type, et un champ d'information de la trame de réponse prédéterminée d'unidiffusion indique les informations transportées de ressources correspondantes sélectionnées par le noeud secondaire de second type.

7. Procédé selon la revendication 1, dans lequel la réalisation d'un traitement de transmission parallèle sur les multiples noeuds secondaires selon les ressources correspondantes (S208) comprend :
l'envoi de données correspondantes aux multiples noeuds secondaires à un même instant par adoption de différentes ressources correspondantes, dans lequel chaque élément de données envoyé au noeud secondaire de second type transporte des informations d'indication d'ajustement de paramètre de réponse utilisées pour ajuster des paramètres de réponse du noeud secondaire correspondant répondant aux données.

8. Procédé selon la revendication 7, avant l'envoi des données correspondantes aux multiples noeuds secondaires au même instant par adoption de différentes ressources correspondantes, comprenant en outre :
l'acquisition de paramètres de réponse correspondant aux multiples noeuds secondaires, dans lequel les informations d'indication d'ajustement de paramètre de réponse prennent un paramètre du noeud secondaire de premier type en tant que critère lorsque les multiples noeuds secondaires comprennent en outre le noeud secondaire de premier type ne prenant pas en charge un traitement de message parallèle.

9. Procédé selon la revendication 7, dans lequel les informations d'indication d'ajustement de paramètre de réponse comprennent au moins une parmi :
une information d'ajustement de puissance utilisée pour ajuster une puissance d'envoi des informations de réponse, une information d'ajustement de point dans le temps d'envoi immédiat de réponse utilisé pour ajuster un point dans le temps d'envoi des informations de réponse, et une information de pré-ajustement de décalage de fréquence porteuse utilisée pour ajuster une fréquence porteuse d'envoi des informations de réponse.

10. Procédé selon l'une quelconque des revendications 1 à 9, dans lequel les ressources correspondantes comprennent au moins un parmi :
des ressources de domaine fréquentiel, des ressources de répartition par codes et des ressources de domaine spatial.

11. Procédé selon l'une quelconque des revendications précédentes 3 à 6, dans lequel, lorsque les ressources correspondantes sont des ressources de domaine fréquentiel, les premières informations de gamme de ressources et les secondes informations de gamme de ressources comprennent respectivement au moins une parmi :
une information de position initiale et de largeur de bande d'une bande de fréquences ;
une information de position temporaire et de largeur de bande de canal primaire de la bande de fréquences ;
la position temporaire de canal primaire de la bande de fréquences ; et
une information de liste de sous-canaux.

12. Dispositif de noeud primaire, adapté pour fonctionner dans un réseau local sans fil, WLAN, comprenant :
un premier composant de détermination (32), configuré pour déterminer des types de noeuds de multiples noeuds secondaires utilisés pour une transmission parallèle, dans lequel les types de noeuds comprennent : un noeud secondaire de premier type ne prenant pas en charge le traitement de message parallèle et un noeud secondaire de second type prenant en charge le traitement de message parallèle ;
un deuxième composant de détermination (34), configuré pour déterminer, selon les types de noeuds déterminés, une manière de négociation de ressource utiliser pour négocier des ressources de chaque noeud secondaire pour la transmission parallèle ;
un troisième composant de détermination (36), configuré pour déterminer des ressources correspondantes correspondant respectivement aux multiples noeuds secondaires selon la manière de négociation de ressource déterminée ; et
un composant de traitement (38), configuré pour réaliser un traitement de transmission parallèle sur les multiples noeuds secondaires selon les ressources correspondantes.

13. Dispositif selon la revendication 12, dans lequel le second composant de détermination (34) comprend au moins un parmi :
un premier élément de détermination (42), configuré pour, lorsque les types de noeuds des multiples noeuds secondaires comprennent en outre le noeud secondaire de premier type ne prenant pas en charge le traitement de message parallèle, déterminer qu'une manière de négociation de ressource de négociation de ressource indépendante respective est adoptée pour le noeud secondaire de premier type et pour le noeud secondaire de second type ;
un deuxième élément de détermination (44), configuré pour, lorsque les types de noeuds des multiples noeuds secondaires comprennent uniquement les noeuds secondaires de second type prenant en charge le traitement de message parallèle, déterminer qu'une manière de négociation de ressource de négociation de ressource indépendante respective est adoptée pour les noeuds secondaires de second type ; et
un troisième élément de détermination (46), configuré pour, lorsque les types de noeuds des multiples noeuds secondaires comprennent uniquement les noeuds secondaires de second type prenant en charge le traitement de message parallèle, déterminer qu'une manière de négociation de ressource de négociation parallèle simultanée est adoptée pour les noeuds secondaires de second type.

14. Dispositif selon la revendication 12, dans lequel
le troisième composant de détermination (36) comprend :
un premier élément d'envoi (52), configuré pour, lorsque les types de noeuds des multiples noeuds secondaires comprennent en outre le noeud secondaire de premier type ne prenant pas en charge le traitement de message parallèle, envoyer, après que des ressources correspondantes du noeud secondaire de premier type sur un canal primaire sont déterminées, au noeud secondaire de second type un message de demande utilisé pour demander une transmission de données, dans lequel le message de demande envoyé au noeud secondaire de second type transporte des premières informations de gamme de ressources pour des ressources à l'exception des ressources occupées par le noeud secondaire de premier type ; et
un quatrième élément de détermination (54), configuré pour déterminer des ressources correspondantes du noeud secondaire de second type selon le message de réponse renvoyé par le noeud secondaire de second type, dans lequel le message de réponse renvoyé par le noeud secondaire de second type transporte des informations de ressources correspondantes du noeud secondaire de second type, dans lequel les ressources correspondantes du noeud secondaire de second type sont sélectionnées par le noeud secondaire de second type ;
ou,
le troisième composant de détermination (36) comprend :
un second élément d'envoi (72), configuré pour, lorsque les types de noeuds des multiples noeuds secondaires comprennent uniquement les noeuds secondaires de second type prenant en charge le traitement de message parallèle, envoyer un message de demande, utilisé pour demander une transmission de données, au noeud secondaire de second type, dans lequel le message de demande transporte des secondes informations de gamme de ressources de ressources pour le noeud secondaire de second type pour sélectionner pour une transmission parallèle ; et un sixième élément de détermination (74), configuré pour déterminer des ressources correspondantes du noeud secondaire de second type selon le message de réponse reçu envoyé par le noeud secondaire de second type, dans lequel le message de réponse transporte des informations des ressources correspondantes sélectionnées par le noeud secondaire de second type selon les secondes informations de gamme de ressources.

15. Dispositif selon la revendication 14, dans lequel le troisième composant de détermination (36) comprend en outre :
un cinquième élément de détermination (62), configuré pour déterminer que les ressources correspondant au noeud secondaire de premier type comprennent des ressources de canal primaire, dans lequel le temps de transmission pour une transmission parallèle sur un canal secondaire est déterminé par le temps de transmission de données sur le canal primaire.

16. Dispositif selon la revendication 12, dans lequel le composant de traitement (38) comprend :
un troisième élément d'envoi (82), configuré pour envoyer des données correspondantes aux multiples noeuds secondaires à un même instant par adoption de différentes ressources correspondantes, dans lequel chaque élément de données envoyé au noeud secondaire de second type transporte des informations d'indication d'ajustement de paramètre de réponse utilisées pour ajuster des paramètres de réponse du noeud secondaire correspondant répondant aux données.

17. Dispositif selon la revendication 16, comprenant en outre :
un élément d'acquisition (92), configuré pour acquérir des paramètres de réponse correspondant aux multiples noeuds secondaires, dans lequel les informations d'indication d'ajustement de paramètre de réponse prennent un paramètre de réponse paramètre du noeud secondaire de premier type en tant que critère lorsque les multiples noeuds secondaires comprennent en outre le noeud secondaire de premier type ne prenant pas en charge un traitement de message parallèle.

18. Équipement de traitement de transmission parallèle, comprenant le dispositif selon l'une quelconque des revendications 12 à 17.

19. Produit-programme d'ordinateur comprenant un moyen de code adapté pour réaliser toutes les étapes du procédé selon l'une quelconque des revendications 1 à 11, lorsqu'il est exécuté par un noeud primaire dans un réseau local sans fil.
